# EUROPEAN PATENT SPECIFICATION

(11) **EP 0 404 571 B1**
(45) Date of publication and mention of the grant of the patent: **27.11.1996**
(21) Application number: 90306795.7
(22) Date of filing: 21.06.1990
(51) Int. Cl.: C04B 35/83

(54) **Sliding member**
Gleitbauteil
Glissoir

(30) Priority: 22.06.1989 JP 160241/89; 29.12.1989 JP 341883/89
(43) Date of publication of application: 27.12.1990
(73) Proprietor: TOYOTA JIDOSHA KABUSHIKI KAISHA, Aichi-ken 471 (JP); OSAKA GAS CO., LTD., Osaka-shi, Osaka-fu 541 (JP)
(72) Inventor: Miura, Hirohisa, Toyota-shi, Aichi-ken (JP); Okamoto, Mamoru, Toyota-shi, Aichi-ken (JP); Tsuchiya, Shoichi, Toyota-shi, Aichi-ken (JP); Fuwa, Yoshio, Toyota-shi, Aichi-ken (JP); Michioka, Hirohumi, Toyota-shi, Aichi-ken (JP); Nakagawa, Yoshiteru, c/o Osaka Gas Company Ltd., Osaka-shi, Osaka-fu (JP); Nakatani, Satoru, c/o Osaka Gas Company Ltd., Osaka-shi, Osaka-fu (JP)
(74) Representative: Ben-Nathan, Laurence Albert

(56) References cited:
- DE-A- 2 165 029
- CHEMICAL ABSTRACTS, vol. 110, no. 9, 1st May 1989, page 330, abstract no. 159377q, Columbus, Ohio, US; & JP-A-63 265 863 (KAWASAKI STEEL CORP.) 02-11-1988
- CHEMICAL ABSTRACTS, vol. 106, no. 14, April 1987, page 308, abstract no. 106975u, Columbus, Ohio, US; & JP-A-61 215 256 (KOMATSU, LTD) 25-09-1986
- CHEMICAL ABSTRACTS, vol. 108, no. 26, June 1988, page 260, abstract no. 225867m, Columbus, Ohio, US; & JP-A-63 60 173 (SUMITOMO ELECTRIC INDUSTRIES, LTD) 16-03-1988
- CHEMICAL ABSTRACTS, vol. 108, no. 14, April 1988, page 342, abstract no. 117717d, Columbus, Ohio, US; & JP-A-62 252 370 (ALLIED CORP.) 04-11-1987

## Description

### BACKGROUND OF THE INVENTION

### Field of the Invention

The present invention relates to a raw mixture for making a sliding member having high strength and excellent heat resistance, abrasion resistance and oxidation resistance. The sliding member is suitable for making a brake shoe, a brake lining, a brake pad, a bush, a thrust washer, a piston ring, vanes, rotors and sleeves of pumps, a bearing for a high temperature application and the like for an aircraft, a racing car and so on.

The raw mixture of the present invention can be applied to both a dry type friction member and a wet type friction member. Further, the raw mixture of the present invention can be made into a sliding member having a low friction coefficient and excellent anti-seizure properties under a dry sliding condition and being applicable to a mechanical structural body, thereby contributing to reduce the frictional loss thereof.

### Description of the Prior Art

A sliding member used in a brake shoe component member the like for an aircraft, a racing car and so on especially requires heat resistance and abrasion resistance. On the contrary, since a sliding portion of a mechanical structural body has poor anti-seizure properties, the sliding portion is usually used under an oil lubrication condition. As for a sliding member used under a dry condition, a sintered material impregnated with an oil, a copper sintered alloy and a carbon material have been well known. As for the carbon material, the following carbon materials have been used, i.e., a carbon material made by burning and solidifying a carbonaceous powder and the other carbon material made by sintering a carbonaceous powder at a high temperature to graphitize the carbonaceous powder.

Recently, carbon fiber reinforced carbon has been provided for the above-mentioned applications, and is said to be a material improving the strength of the conventional carbon materials. According to Japanese Unexamined Patent Publication (KOKAI) No. 206351/1988, this carbon fiber reinforced carbon is produced by impregnating a liquid carbonaceous material, such as tar, pitch and thermosetting resin, which works as a binder into carbon fiber which works as a reinforcement and which has been carbonized or graphitized and further subjected to a surface treatment like oxidation. Then, the resulting binder impregnated carbon fiber is burned in an inert gas atmosphere. If necessary, the resulting sintered product is graphitized thereafter.

Since the carbon fiber reinforced carbon thus produced uses the liquid carbonaceous material as the binder, volatile substances are generated by the decomposition of the liquid carbonaceous material during the burning, thereby forming pores. Accordingly, the boundary adhesion between the reinforcement and the binder deteriorates, and the density of the product decreases. Consequently, the product is inferior in the strength and the abrasion resistance.

To solve the above-mentioned problems, the pores of the product have been repeatedly filled with a liquid impregnant working as a binder, and the product has been repeatedly re-burned to decrease the porosity. However, in spite of these complicated processes, the product thus obtained has been still porous. In addition, these complicated processes have resulted in the increasing manufacturing cost.

Further, the above-mentioned conventional carbon fiber reinforced carbon suffers from a low friction coefficient (µ) especially under a low load.

Furthermore, though the above-mentioned conventional carbon fibre reinforced carbon has been known to be superior in the anti-seizure properties, it is seized at the load of 50 to 75 kgf/cm² which is as much as 3 to 4 times that of steel for a structural application under a dry condition. In addition, since the carbon fibre reinforced carbon only exhibits the friction coefficient (µ) of 0.2 to 0.5 under a dry condition, it is not a material of a low friction coefficient, nor a suitable material for a sliding portion of a mechanical structural body.

DE-A-2,165,029 discloses a composite produced by sintering a mixture of an organic fibre having a carbon yield of 50-92% and an organic binder, e.g. phenol resin and pitch, having a carbon yield of 10% or more.

Chemical Abstracts Vol. 110 No. 159377q discloses a composite comprising mesocarbon microbeads, glassy carbon, and carbon fibres and/or graphite fibres, which the glassy carbon is an essential component. The glassy carbon is prepared by sintering and carbonizing a thermosetting resin as a binder, e.g. phenol resin.

Chemical Abstracts Vol. 106, No. 106975u discloses a composite produced by adding boron nitride powders to phenol-formaldehyde resin as a binder, and the mixture thereof is heated, molded and then carbonized by sintering to form the composite.

Chemical Abstracts Vol. 108, No. 225867m discloses a composite containing ceramic particles having a predetermined particle diameter. A carbon base material, such as phenol resin, pitch or the like, is mixed with the ceramic powders, and the mixture is impregnated into the carbon fibre substrate.

Chemical Abstracts Vol. 108, No. 117717d discloses a carbon composite brake manufactured by molding a mixture containing chopped carbon fibre, thermosetting resin, and hard phase additives and heating to convert the thermosetting resin to glassy carbon, coating carbon on the composite by CVD or impregnating the composite in the liquid type resin or pitch to density it, sintering and machine working the composite to form the brake.

### SUMMARY OF THE INVENTION

The present invention has been developed in view of these problems, and it is therefore an object of the present invention to provide a raw mixture for making a sliding member having high strength and an excellent friction/abrasion property and being manufacturable at a low cost.

Further, it is another object of the present invention to provide a raw mixture for making a sliding member having high strength, excellent abrasion resistance, high anti-seizure properties, i.e., exhibiting a load of 100 kgf/cm² or more at seizure, and exhibiting a friction coefficient of 0.15 or less.

The invention provides a dry molding composition for making a sliding member having a predetermined shape and comprising a sintered body, said composition comprising a mixture of :
preliminarily carbonized carbonaceous fibre;
inorganic powder or inorganic fibre; and
self-sintering carbonaceous powder with said preliminarily carbonized carbonaceous fibre and said inorganic powder or said inorganic fibre buried therein.

In particular, a raw mixture according to the present invention which is suitable for making a sliding portion of a mechanical structural body having a predetermined shape, and comprising a sintered body, comprises: preliminarily carbonized carbonaceous fibre; boron compound powder; and self-sintering carbonaceous powder with the preliminarily carbonized carbonaceous fibre and the boron compound powder buried therein.

The shape of the sliding member is not restricted particularly. For example, the sliding member may be made into a predetermined shape of a brake shoe, a brake lining, a brake pad, a piston ring, a bearing and the like.

The preliminarily carbonized carbonaceous fiber constitutes a reinforcement of the sliding member of the present invention. The raw material of the preliminarily carbonized carbonaceous fiber is not restricted particularly. For example, the raw material may be PAN (polyacrylonitrile), rayon, or pitch and the like.

Here, the preliminarily carbonized carbonaceous fiber is a carbonaceous fiber which has not been subjected to an ordinary carbonizing treatment. In other words, it is a carbonaceous fiber which can accept further carbonizing when it is further subjected to a heat treatment. To be concrete, when raw pitch is employed, the preliminarily carbonized carbonaceous fiber may be spun fiber itself or infusible fiber obtained by making the spun fiber infusible at a temperature of less than 550 °C. When polymer fiber such as PAN fiber is employed, the preliminarily carbonized carbonaceous fiber may be polymer fiber which has got through a decomposition process and is prior to a graphitizing treatment. As for the carbonaceous fiber of this type, spun pitch fiber obtained by spinning coal or petroleum raw pitch and infusible fiber obtained by making the spun pitch fiber infusible.

The spinning of the raw pitch and the infusible treatment may be carried out according to ordinary methods, and the conditions therefor are not restricted particularly. In most cases, the pitch fiber may be obtained in the following manner: The raw pitch is supplied in a spinning machine, heated at the temperature of about 300 to 400 °C, and extruded through a nozzle of the spinning machine by applying a pressure of an inert gas. The pitch fiber thus obtained may be made into the infusible pitch fiber by heating the pitch fiber at 150 to 500 °C for 0.5 to 5 hours in an oxidizing atmosphere. Here, the raw pitch may be either optically isotropic or optically anisotropic.

As for the fiber length of the preliminarily carbonized carbonaceous fiber, either the short fiber or the long fiber thereof may be used. When using the short fiber, the fiber length thereof may be 0.01 to 50 mm, and particularly the short fiber having the length of 0.03 to 10 mm is preferred in view of the easy mixing and the aspect ratio. When it is too long, the fibers get entangled to deteriorate the dispersibility and finally the product isotropy, one of the important properties of the product. When it is less than 0.01 mm, the strength of the product decreases sharply. As for the fiber diameter thereof, 5 to 25 µm is preferred. Further, a non-woven fabric or a coating fabric made of these fibers may be used.

In addition, the preliminarily carbonized carbonaceous fiber may be preferably subjected to a surface treatment using a viscous material such as tar, pitch and organic polymer in order to improve the affinity with a binder. This surface treatment may be carried out by stirring 100 parts by weight of the preliminarily carbonized carbonaceous fiber with 100 to 1000 parts by weight of the viscous material. The mixture is then washed with an organic solvent, and dried.

The tar or pitch used for the surface treatment may be derived either from coal or petroleum. When the pitch is used, a heat treatment of about 140 to 170 °C is required during the stirring. The tar is accordingly more preferred for the viscous material. Further, coal tar is much more preferred in view of the carbonization material loss in the subsequent carbonizing and graphitizing processes.

The organic polymer used for the surface treatment may be phenol resin, polyvinyl chloride, polyvinyl alcohol and the like.

The organic solvent used for the washing of the surface treatment may be an aromatic solvent such as toluene and xylene. The washing is carried out by stirring 100 parts by weight of the mixture of the preliminarily carbonized carbonaceous fiber and the viscous material with 100 to 1000 parts by weight of the organic solvent, thereby removing light oil components containing many volatile substances. The preliminarily carbonized carbonaceous fiber thus washed is dried by heating and/or depressurizing in a non-oxidizing atmosphere such as nitrogen and argon. The drying is not restricted to the above as far as the organic solvent employed for the washing can be removed.

Further, the preliminarily carbonized carbonaceous fiber thus surface-treated and dried is dispersed, if required, since the dried preliminarily carbonized carbonaceous fiber may sometimes come together in a mass or aggregate. If such is the case, the dispersion may be carried out by an ordinary means such as a powder mill, an atomizer, a pulverizer and the like.

The inorganic powder or the inorganic fiber constitutes the reinforcement of the sliding member of the present invention together with the preliminarily carbonized carbonaceous fiber. Depending on a specific application of a sliding member to be manufactured, the inorganic powder or the inorganic fiber is added in order to increase the friction coefficient (µ) of the sliding member and make it stable, or in order to give the sliding member high abrasion resistance and high anti-seizure properties even when the sliding member has a friction coefficient (µ) of a low value. The inorganic powder or the inorganic fiber may preferably be one having the melting point of 1000 °C or higher and being not reactable with carbon, and may more preferably be one having the hardness of 1000 Hv or more as well.

As for the inorganic substance therefor, inorganic oxide, inorganic carbide, inorganic nitride, inorganic boride and the like may be used. The inorganic oxide may be Al₂O₃, TiO₂, ZrO₂, MgO and the like. The inorganic carbide may be B₄C, TiC, TaC, ZrC and the like. The inorganic nitride may be BN, TiN, Cr₂N, TaN, AlN, ZrN and the like. The inorganic boride may be TiB₂, ZrB₂, B₄C, NiB, CoB, BN, TaB₂ and the like. Further, inorganic substances of Fe, Mn, Mo, Ni, Nb, Si, V, Ti, W and the like may be used. Besides, these inorganic substances may be added in their metallic states. Moreover, the inorganic fiber includes whisker and ceramic fiber.

By selecting an optimum one from the above-mentioned inorganic powders or inorganic fibers, the properties, i.e., the friction coefficient (µ), the abrasion resistance, the anti-seizure properties and the like, may be controlled to optimum properties depending on an application of a sliding member. Particularly, in order to make the sliding member suitable for a sliding portion of a mechanical structural body, namely in order to make a completed product into a sliding member having high strength, excellent abrasion resistance, high anti-seizure properties, i.e., exhibiting a load of 100 kgf/cm² or more at seizure, and exhibiting a friction coefficient of 0.15 or less, a boron compound may be used for the inorganic powder.

As for the boron compound, it is preferable to use a boron compound which does not decompose or fuse at a temperature less than the sintering temperature. However, a boron compound which decomposes at the sintering temperature may be used in the case that the boron compound, such as MgB₂ and CoB decomposing at a sintering temperature, decomposes to produce boron and the decomposed boron reacts with carbon to produce boron carbide. As for the boron compound, boron carbide, boron nitride and the like may be used. Additionally, boride of Cr, Ti, Ta, Zr, Al, Ni, Mg, Nb, Mn, Fe, V, W and the like may be used.

When the inorganic powder is used as the inorganic substance, the average particle diameter thereof is preferred to fall in the range of 0.1 to 5 µm in view of the affinity with the matrix, the dispersibility and the strength and abrasion resistance of the completed sintered body. It is more preferred to fall in the range of 0.2 to 4 µm.

When the inorganic fiber is used as the inorganic substance, the diameter and the length thereof are preferred to fall in the ranges of 0.7 to 40 µm and 0.01 to 8 mm respectively in view of the affinity with the matrix, the dispersibility, the strength and abrasion resistance of the completed sintered body and the removability of the inorganic fiber. They are more preferred to fall in the ranges of 1 to 15 µm and 0.05 to 3 mm respectively.

Particularly, when the boron compound is used as the inorganic powder in order to make the sliding member suitable for a sliding portion of a mechanical structural body, the average particle diameter of the boron compound is preferred to fall in the range of 0.1 to 10 µm, and more preferred to fall in the range of 0.3 to 5 µm. When it is less than 0.1 µm, it is hard to mix the boron compound with the preliminarily carbonized carbonaceous fiber and the self-sintering carbonaceous powder uniformly. When it is more than 10 µm, the possibility of the abnormal or aggressive abrasion increases.

The self-sintering carbonaceous powder constitutes a binder of the sliding member according to the present invention. The self-sintering carbonaceous powder is a powder having a self-sintering property and being preliminarily carbonized or not being completely carbonized. The self-sintering carbonaceous powder may be derived either from coal or petroleum. To be concrete, mesocarbon microbeads, pulverized bulkmesophase powder, pulverized low temperature calcined coke powder and the like may be used. In particular, the mesocarbon microbeads of coal or petroleum is preferred among them in view of its uniform and stable particle diameter and composition. Further, the mesocarbon microbeads of coal is more preferred in view of the carbonization material loss in the carbonizing process. The self-sintering carbonaceous powder having the average particle diameter of 30 µm or less and the β-resin amount falling in the range by weight of 3 to 50 % is preferred. Furthermore, the β-resin amount may more preferably fall in the range of 6 to 30 %, and it may much more preferably fall in the range of 8 to 25 %.

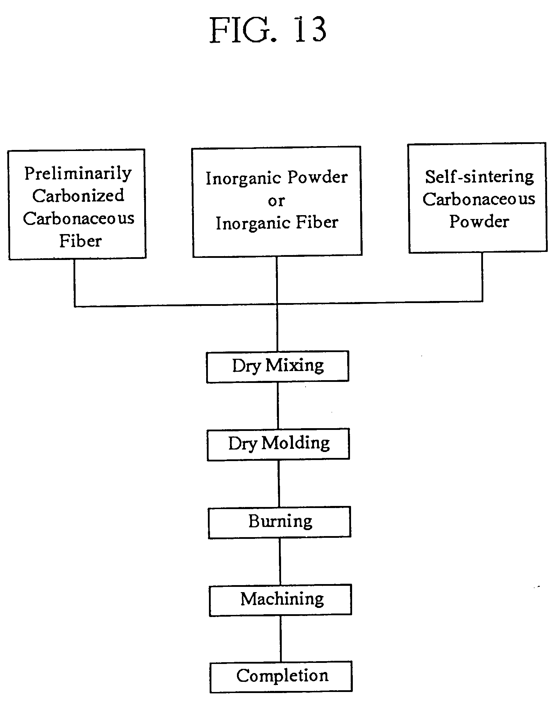

The sliding member made of a raw mixture of the present invention may be manufactured, for instance, by a simple manufacturing process illustrated in Figure 13 and comprising a dry mixing step, a dry molding step and a burning step.

The preliminarily carbonized carbonaceous fiber, the inorganic powder or the inorganic fiber and the self-sintering cabonaceous powder is mixed and molded into a composite body. The mixing method is not restricted particularly, however it is preferred to uniformly mix the above-mentioned raw materials in order to make the strength and the abrasion resistance of the product isotropic. Here, the composition of the self-sintering carbonaceous powder and the preliminarily carbonized carbonaceous fiber may be 100 parts by weight of the former to 2 to 70 parts by weight of the latter. More preferably, it may be 100 parts by weight of the former to 10 to 50 parts by weight of the latter. Further, the addition amount of the inorganic powder or the inorganic fiber may preferably be 3 to 30 % by weight with respect to the whole amount of the raw materials taken as 100 % by weight. More preferably, it may be 5 to 10 % by weight with respect to the whole amount.

In particular, when the boron compound is used as the inorganic powder in order to make the sliding member suitable for a sliding portion of a mechanical structural body, the addition amount of the boron compound may preferably be 1 to 50 % by weight with respect to the whole amount of the raw materials taken as 100 % by weight. More preferably, it may be 3 to 35 % by weight with respect to the whole amount. When the addition amount of the boron compound is more than 50 % by weight, the machinability of the sintered body becomes improper and the strength thereof deteriorates slightly.

The molding operation of the sliding member made of a raw mixture according to the present invention may be carried out by an ordinary molding method. In the molding operation, a mixture of the preliminarily carbonized carbonaceous fiber, the inorganic powder or the inorganic fiber and the self-sintering carbonaceous powder is usually molded into a predetermined shape in a mold while applying the pressure of 1 to 10 ton/cm². Or the molding operation may be done by the CIP method, the HIP method, the hot pressing method and the like. The molding operation may be carried out at an ordinary temperature to 500 °C in an inert gas atmosphere.

The composite body is sintered, and made into the sliding member. Here, the sintering is to carbonize and solidify the preliminarily carbonized carbonaceous fiber and the self-sintering carbonaceous powder by burning at about 700 to 1500 °C under an ordinary pressure. Further, the thus carbonized and solidified composite body may be graphitized by heating to the sintering temperature or more in a graphitizing furnace, if necessary.

The conditions of the carbonizing are not restricted particularly. The carbonizing may usually be carried out by increasing the temperature starting at an ordinary temperature to about 1500 °C at the rate of about 0.1 to 300 °C/hour and by keeping the temperature of about 1500 °C for about 0.5 to 10 hours in a non-oxidizing atmosphere. Moreover, also during the sintering, part of the composite body is graphitized by heating to a higher temperature after the carbonizing.

Likewise, the conditions of the graphitizing are not restricted particularly. The graphitizing may be carried out by increasing the temperature starting at the sintering temperature to the temperature of 1500 to 3000 °C at the rate of about 0.1 to 500 °C/hour and by keeping the temperature of about 1500 to 3000 °C for about 0.5 to 10 hours in a non-oxidizing atmosphere. When the composite body is graphitized, the graphite crystals have grown fully and oriented orderly to improve the density, strength and abrasion resistance of the product.

In the sliding member made of a raw mixture of the present invention, the composite body before the sintering comprises: the preliminarily carbonized carbonaceous fiber; the inorganic powder or the inorganic fiber; and the self-sintering carbonaceous powder with the preliminarily carbonized carbonaceous fiber and the inorganic powder or the inorganic fiber buried therein.

Accordingly, when the composite body is sintered, the preliminarily carbonized carbonaceous fiber working as the reinforcement and the self-sintering carbonaceous powder working as the binder come to have substantially the same physical properties on the strength, the shrinkage rate and the like, because the preliminarily carbonized carbonaceous fiber has not been completely carbonized yet. As a result, the boundary adhesion between the preliminarily carbonized carbonaceous fiber and the self-sintering carbonaceous powder has been improved, whereby the high strength and excellent abrasion resistance can be obtained. In short, when the composite body is sintered, both of the preliminarily carbonized ones, i.e., the preliminarily carbonized carbonaceous fiber and the self-sintering carbonaceous powder, shrink by substantially the equal degree and get together, whereby the boundary adhesion therebetween has been improved. Thus, the strength and abrasion resistance of the sliding member have been improved.

Further, by adding the inorganic powder or the inorganic fiber, a mechanical resistance force is exerted between the sliding member and a mating member, thereby making the friction coefficient (µ) high and stable. Namely, since the added inorganic powder or inorganic fiber exerts a mechanical resistance force to the mating member, the friction coefficient (µ) of the sliding member becomes high and stable.

For instance, when the inorganic powder is added, the inorganic powder becomes likely to remove from the carbon matrix portion as the increment of load because the inorganic powder is in a powder form. The removal of the inorganic powder balances the adhesion of the carbon matrix, thereby making the friction coefficient (µ) stable against the fluctuation of load. On the contrary, when the inorganic fiber is added, the inorganic fiber becomes less likely to remove from the carbon matrix portion as the increment of load because the inorganic fiber is in a fiber form. Thus, the sliding member comes to exhibit a friction coefficient (µ) of an extremely high value.

Furthermore, the self-sintering carbonaceous powder working as the binder has got rid of the conventional binder comprising the liquid carbonaceous material as mentioned earlier. Therefore, it is not necessary to carry out the re-impregnating and re-burning for repeatedly filling the pores resulting from the conventional liquid carbonaceous material, and the sliding member of the present invention can be manufactured by the above-mentioned simple process, illustrated in Figure 13 and comprising a dry mixing step, a dry molding step and a burning step, at a low cost accordingly.

Moreover, by selecting an optimum inorganic powder or inorganic fiber, the friction coefficient (µ) of a completed sliding member can be controlled to an optimum value depending on an application thereof. In particular, in the case that the boron compound is added in order to make the sliding member suitable for a sliding portion of a mechanical structural body, the boron compound is thermally decomposed, thereby generating the liquid phase thereof, when a high load is applied to the sliding member, namely when the sliding member is subjected to a high temperature. The liquid phase of the boron compound improves the anti-seizure properties of the sliding member, and thus it is believed that the friction coefficient (µ) of thereof can be suppressed to a low value.

For instance, when the inorganic boride is used as the inorganic powder, the friction coefficient (µ) of the sliding member can be controlled in the range of 0.05 to 0.2. When the inorganic carbide is used as the inorganic powder, the friction coefficient (µ) of the sliding member can be controlled in the range of 0.15 to 0.35. When the inorganic nitride is used as the inorganic powder, the friction coefficient (µ) of the sliding member can be controlled in the range of 0.1 to 0.35. When the inorganic oxide is used as the inorganic powder, the friction coefficient (µ) of the sliding member can be controlled in the range of 0.25 to 0.5.

Here, it is believed that the friction coefficient (µ) of the sliding member is varied greatly by the addition of the inorganic powder or the inorganic fiber because the state of the inorganic powder or the inorganic fiber is varied by the heat generation associating with the sliding movement. For instance, since the oxide has high heat resistance and keeps the particle or fiber configuration during the sliding movement, the sliding member is believed to exhibit a higher friction coefficient (µ) accordingly. Contrary to the oxide, since the boride is decomposed by the heat generation during the sliding movement and produces the liquid phase, the boride is believed to decrease the friction coefficient (µ) of the sliding member.

In addition, when the preliminarily carbonized carbonaceous fiber is subjected to the surface treatment using the viscous material such as tar, pitch and organic polymer, the wettability of the boundary surface of the preliminarily carbonized carbonaceous fiber increases. The boundary adhesion between the preliminarily carbonized carbonaceous fiber and the self-sintering carbonaceous powder working as the binder has been thus further improved because the affinity between the preliminarily carbonized carbonaceous fiber and the self-sintering carbonaceous powder has been increased.

As described so far, the sliding member made of a raw mixture of the present invention has excellent properties such as high strength, high heat resistance, high abrasion resistance, high oxidation resistance and the like, it can be applied to a brake shoe, a brake lining, a brake pad, a bush, a thrust washer, a piston ring, vanes, rotors and sleeves of pumps, a bearing for a high temperature application and the like for an aircraft, a racing car and so on. In adition, it is expected that the sliding member may be applied to electrodes such as electrodes for electrical discharge machining, carbon electrodes and the like.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
Figure 1 is a line chart showing the results of the measurement on the friction coefficients (µ under no lubrication condition) of the sliding members of Examples 1 through 6 and Comparative Example 1;
Figure 2 is a column chart showing the results of the measurement on the friction coefficients (µ under oil lubrication condition) of the sliding members of Examples 1 through 6, Comparative Example 1 and Comparative Example 2 made from a commercially available carbon-carbon composite material;
Figure 3 is a column chart showing the results of the measurement on the loads at seizure (under no lubrication condition) of the sliding members of Examples 1 through 6 and Comparative Examples 1 and 2;
Figure 4 is a column chart showing the results of the measurement on the abrasion amounts (under oil lubrication condition) of the sliding members of Examples 1 through 6 and Comparative Examples 1 and 2;
Figure 5 is a column chart showing the results of the measurement on the abrasion amounts (under oil lubrication condition) of the sliding members of Examples 7, 9, 10 and 12 and Comparative Examples 3 through 5;
Figure 6 is a diagram showing the results of the measurement on the friction coefficients (µ under no lubrication condition) of the sliding members of Examples 13 through 16 and Comparative Example 1;
Figure 7 is a line chart showing the results of the measurement on the friction coefficients (µ under no lubrication condition) of the sliding members of Examples 17 through 22;
Figure 8 is a line chart showing the results of the measurement on the friction coefficients (µ under no lubrication condition) of the sliding members of Examples 23 through 30;
Figure 9 is a diagram showing the results of the measurement on the abrasion amounts (under oil lubrication) of the sliding members of Examples 31 through 34 and Comparative Examples 1 and 5;
Figure 10 is a line chart showing the variations of the densities of the sliding members of Examples 35 and 36 with respect to the variations of the inorganic addition anounts thereof:
Figure 11 is a line chart showing the variations of the abrasion amounts of the sliding members of Examples 35 and 36 with respect to the variations of the inorganic addition amounts thereof;
Figure 12 is a line chart showing the variations of the bending strength of the sliding members of Examples 35 and 36 with respect to the variations of the inorganic addition amounts thereof; and
Figure 13 is a block diagram showing a manufacturing process of a sliding member of the present invention.

### DETAILED DESCRIPTION OF THE PREFERRED EMBODIMENTS OF THE INVENTION

Having generally described the present invention, a further understanding can be obtained by reference to certain specific preferred embodiments which are provided herein for purposes of illustration only and are not intended to be limiting unless otherwise specified.

### (Example 1)

Preliminarily carbonized carbonaceous fiber comprising infusible fiber was prepared. The infusible fiber was made from optically isotropic coal pitch by an ordinary method, and had the fiber diameter of 15 µm and the fiber length of 0.5 mm. Then, 500 parts by weight of tar was added to 100 parts by weight of this preliminarily carbonized carbonaceous fiber working as the reinforcement. The mixture was stirred at an ordinary temperature for 15 minutes and filtered thereafter. Further, 500 parts by weight of toluene was added thereto, stirred for 30 minutes, filtered, and dried to 150°C in a nitrogen atmosphere for 3 hours to make tar-treated infusible preliminarily carbonized carbonaceous fiber.

A mixture was then prepared which included 30 % by weight of the tar-treated infusible preliminarily carbonized carbonaceous fiber thus obtained and 70 % by weight of a self-sintering carbonaceous powder comprising coal tar mesocarbon microbeads and working as the binder. The coal tar mesocarbon microbeads had the average particle diameter of 7 µm. Then, 5 % by weight of Al₂O₃ having the average particle diameter of 0.5 µm as the inorganic powder was mixed uniformly with 95 % by weight of the mixture, and a resulting nixture was put into a mold and molded into a composite body having a predetermined shape of a sliding member by applying the molding pressure of 2 ton/cm².

Next, the resulting composite body was burned by increasing the temperature from an ordinary temperature to 1000 °C at the rate of 150 °C/hour and by maintaining the temperature of 1000 °C for 1 hour under an ordinary pressure in a non-oxidizing atmosphere, thereby sintering and solidifying the preliminarily carbonized carbonaceous fiber and the self-sintering carbonaceous powder. Then, the sintered composite body was further sintered by increasing the temperature to 2000 °C at the rate of 500 °C/hour and by maintaining the temperature of 2000 °C for 20 minutes in a non-oxidizing atmosphere. A sliding member of Example 1 was thus obtained.

### (Examples 2 through 4)

The average particle diameter and the addition amount of Al₂O₃ employed as the inorganic powder in Example 1 were varied as listed in Table 1, and the sliding members of Examples 2 through 4 were prepared in the same manner as Example 1.

### (Examples 5 and 6)

In the sliding members of Examples 5 and 6, ZrO₂ fiber was employed as the inorganic fiber instead of Al₂O₃ employed as the inorganic powder in Example 1. ZrO₂ fiber was 5 µm in diameter and 0.5 mm in length, and 5 and 10 % by weight thereof with respect to the whole amount were added respectively in Examples 5 and 6. Similarly, the sliding members of Examples 5 and 6 were prepared in the same manner as Example 1.

### (Comparative Example 1)

Seventy parts by weight of the self-sintering carbonaceous powder comprising the coal tar mesocarbon microbeads having the average particle diameter of 7 µm and employed as the binder in Example 1 was only added

**TABLE 1**

| | Composition (% by weight) | | | |
|---|---|---|---|---|
| | Carbonaceous Powder | Carbonaceous Fiber | Aℓ₂O₃ Powder | ZrO ₂ Fiber |
| | | | Par. Dia. /Amount (µm) | Dia.,Length / Amount (µm,mm) |
| Ex. 1 | 66.5 | 28.5 | 0.5/5 | None |
| Ex. 2 | 63.0 | 27.0 | 0.5/10 | None |
| Ex. 3 | 66.5 | 28.5 | 4/5 | None |
| Ex. 4 | 63.0 | 27.0 | 4/10 | None |
| Ex. 5 | 66.5 | 28.5 | None | 5, 0.5/5 |
| Ex. 6 | 63.0 | 27.0 | None | 5, 0.5/10 |

to 30 parts by weight of the tar-treated preliminarily carbonized carbonaceous fiber working as the reinforcement to make a composite body. Other than this arrangement, namely other than that the composite body is free from the inorganic powder or the inorganic fiber, the sliding member of Comparative Example 1 was prepared in the same manner as Example 1.

### (Evaluation 1)

The sliding members of Examples 1 through 6 and Comparative Example 1 were evaluated on the properties of their friction coefficients ( µ) under no lubrication condition. The evaluation was carried out to measure the friction coefficients (µ) of the sliding members of Examples 1 through 6 and Comparative Example 1 with a machine testing laboratory type friction/abrasion tester under the following conditions:
No lubrication;
Speed of 160 rpm (or sliding speed of 2 cm/second);
The sliding area of the test pieces are 2cm².
Load increasing at the rate of 10 kgf per 2 minutes; and
Mating member made of high carbon content chromium steel for bearing (SUJ2 as per JIS, hereinafter simply referred to as "SUJ2").

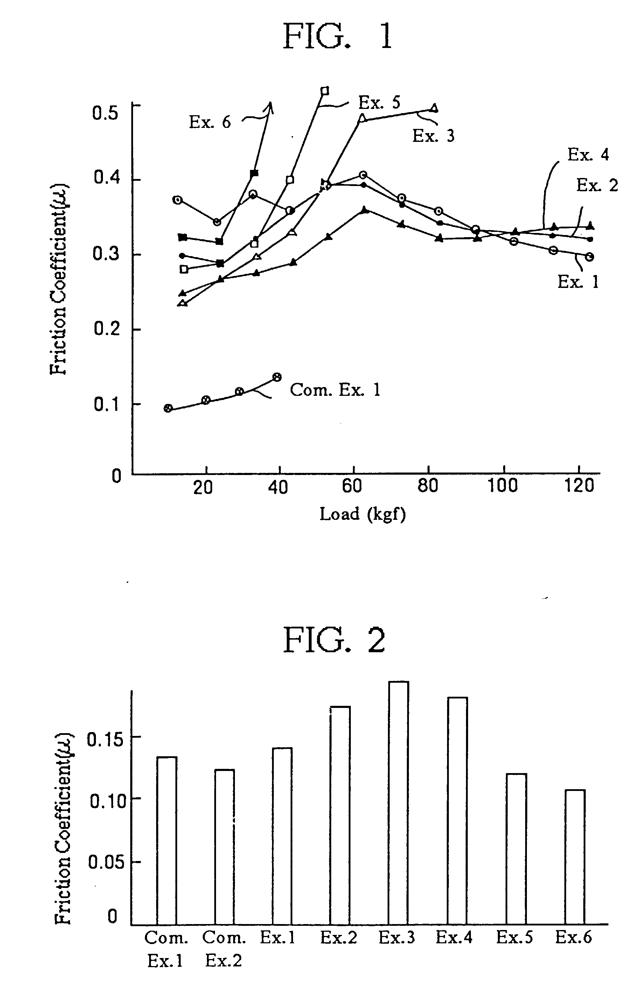

The results of the measurement are shown in Figure 1.

It is apparent from Figure 1 that the sliding members of Examples 1 through 6 had higher friction coefficients (µ) under low load than Comparative Example 1 did. This is believed as follows: A mechanical resistance force was exerted between the sliding members and the mating member because the Al₂O₃ or ZrO₂ as the inorganic powder or the inorganic fiber were added in the sliding members of Examples 1 through 6.

Moreover, the sliding members of Examples 1 through 4, in which Al₂O₃ as the inorganic powder was added, exhibited stable friction coefficients ( µ) with respect to the load fluctuation, i.e., the temperature fluctuation. This characteristic is believed to result from the phenomenon that the removal of Al₂O₃ particles from the carbon matrix portion balances the adhesion of the carbon matrix portion. It may be assumed also from the fact that the sliding members of Examples 5 and 6, in which the inorganic fibers less likely to remove from the carbon matrix portion were added, exhibited the friction coefficients (µ) increasing with the increment of the load.

Hence, the sliding members of Examples 5 and 6, in which ZrO₂ as the inorganic fiber was added, exhibited high friction coefficients (µ) of 0.5 or more, extremely high values, under the load of 40 kgf or more, because the inorganic fiber is less likely to remove from the carbon matrix portion.

### (Evaluation 2)

The sliding members of Examples 1 through 6 and Comparative Example 1 and the sliding member of Comparative Example 2 made from a conventional carbon-carbon composite material were evaluated on their properties of the friction coefficients (µ) under oil lubrication. The evaluation was carried out to measure the friction coefficients (µ) of the sliding members of Examples 1 through 6 and Comparative Examples 1 and 2 with an LFW friction/abrasion tester (a Falex Ring and Block tester) under the following conditions at the end of the testing time:
Oil lubrication;
Load of 15 kgf;
Speed of 160 rpm;
Testing time of 15 minutes; and
Mating member made of SUJ2.
Block size is 10 x 15.3 x 6.3 m/m.

The results of the measurement are shown in Figure 2.

As can be seen from Figure 2, the sliding members of Example 1 through 4, in which Al₂O₃ as the inorganic powder was added, had friction coefficients (µ) higher than those of the sliding member of Comparative Example 1 and the sliding member of Comparative Example 2 made from the conventional material.

### (Evaluation 3)

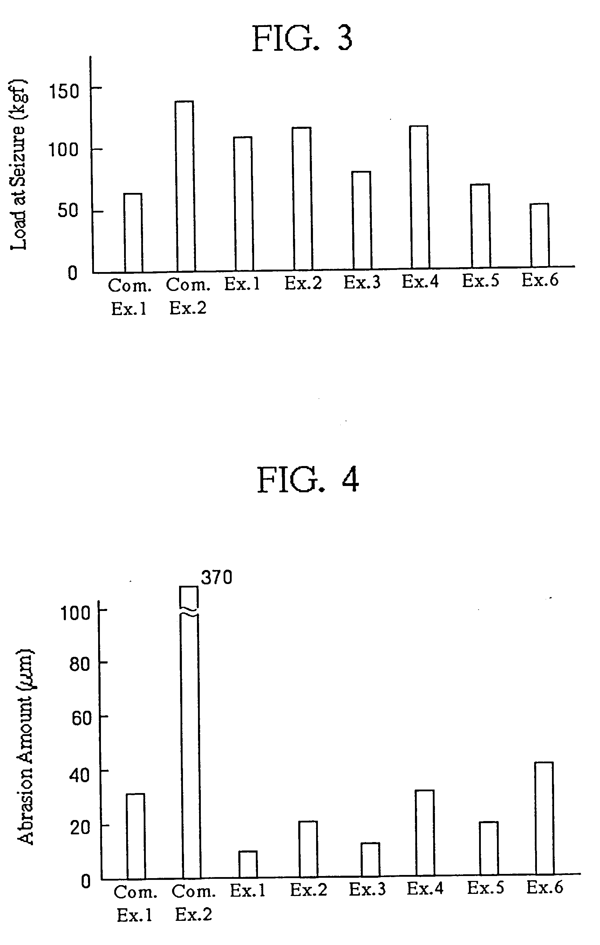

The sliding members of Examples 1 through 6 and Comparative Examples 1 and 2 were evaluated on their anti-seizure properties under no lubrication condition, i.e., load at seizure under no lubrication condition. The evaluation was to measure the load when the sliding members of Examples 1 through 6 and Comparative Examples 1 and 2 suffered from the seizure, and carried out with the machine testing laboratory type friction/abrasion tester under the following conditions:
No lubrication;
Speed of 160 rpm;
Load increasing at the rate of 10 kgf per 2 minutes; and
Mating member made of SUJ2.
The results of the measurement are shown in Figure 3.

As can be seen from Figure 3, although the sliding members of Example 1 through 6 had high friction coefficients (µ) under no lubrication condition, they exhibited the load at seizure substantially equal to those of Comparative Examples 1 and 2.

### (Evaluation 4)

Further, the sliding members of Examples 1 through 6 and Comparative Examples 1 and 2 were evaluated on their abrasion resistance under oil lubrication condition. An abrasion test was carried out with the LFW friction/abrasion tester under the following conditions, and their abrasion amounts were measured at the end of the testing time:
Oil lubrication;
Load of 15 kgf;
Speed of 160 rpm;
Testing time of 15 minutes; and
Mating member made of SUJ2.
The results of the measurement are shown in Figure 4.

As can be seen from Figure 4, although the sliding members of Example 1 through 6 had high friction coefficients (µ) under oil lubrication condition, they had improved the abrasion resistance far better than the sliding member of Comparative Example 2 made from the conventional carbon-carbon composite material did, and their abrasion resistance were substantially equal to that of the sliding member of Comparative Example 1. This is believed as follows: Since the sliding members of Examples 1 through 6 employed the preliminarily carbonized ones for both of the carbonaceous fiber working as the reinforcement and the carbonaceous powder working as the binder, the carbonaceous fiber and the powder came to have substantially the same physical properties on the strength, the shrinkage rate and the like when they were carbonized, thereby improving the boundary adhesion between the carbonaceous fiber and the carbonaceous powder. In addition, it is also believed as follows: Since the sliding member of Examples 1 through 6 employed the preliminarily carbonized carbonaceous fiber surface-treated with the tar, the wettability of the preliminarily carbonized carbonaceous fiber is further increased, thereby further improving the boundary adhesion between the carbonaceous fiber and the carbonaceous powder.

On the contrary, in the sliding member of Comparative Example 2 made from the conventional carbon-carbon composite material, the liquid carbonaceous material used as the binder generates volatile substances during the burning, thereby forming pores. The pores accordingly deteriorated the boundary adhesion between the reinforcement and the binder. Additionally, the sliding member of Comparative Example 2 employed the carbonized or graphitized fiber working as the reinforcement and the preliminarily carbonized liquid carbonaceous material working as the binder. As a result, they had different physical properties on the strength, the shrinkage rate and the like when they were burned, thereby deteriorating the boundary adhesion between the reinforcement and the binder.

### (Example 7)

Optically isotropic coal pitch was supplied in a spinning machine, heated at 340 °C, extruded through a nozzle of the spinning machine by applying a pressure of an inert gas. The pitch fiber thus obtained was further heated at 350° C in an oxidizing atmosphere for 2 hours in order to make it infusible. Thus, infusible preliminarily carbonized carbonaceous fiber was prepared, and had the fiber diameter of 15 µm and the fiber length of 0.5 mm.

A mixture was then prepared which included 30 % by weight of the thus obtained infusible preliminarily carbonized carbonaceous fiber as the reinforcement and 70 % by weight of the self-sintering carbonaceous powder comprising the coal tar mesocarbon microbeads and working as the binder. The coal tar mesocarbon microbeads had the average particle diameter of 7 µm. Then, 5 % by weight of boron carbide compound powders having the average particle diameters of 1.9 µm (produced by Kyoritsu Yogyo Co., LTd.), 5.0 µm (produced by Denki Kagaku Co., Ltd.), 0.5 µm (produced by Denki Kagaku Co., Ltd.) were respectively added to and mixed uniformly with 95 % by weight of the mixture, and resulting mixtures were respectively put into a mold and molded into composite bodies having a predetermined shape of a sliding member by applying the molding pressure of 2 ton/cm².

Next, the resulting composite bodies were burned by increasing the temperature from an ordinary temperature to 1000 °C at the rate of 150 °C/hour and by maintaining the temperature of 1000 °C for 1 hour under an ordinary pressure in a non-oxidizing atmosphere, thereby sintering and solidifying the preliminarily carbonized carbonaceous fiber and the self-sintering carbonaceous powder. Then, the sintered composite bodies were further sintered by increasing the temperature to 2000°C at the rate of 500 °C/hour and by maintaining the temperature of 2000 °C for 20 minutes in a non-oxidizing atmosphere. The sliding members of Example 7 were thus obtained.

Further, 10 % by weight of boron carbide compound powders having the average particle diameters of 1.9 µm (produced by Kyoritsu Yogyo Co., LTd.) , 5.0 µm (produced by Denki Kagaku Co., Ltd.), 0.5 µm (produced by Denki Kagaku Co., Ltd.) were respectively added to and mixed uniformly with 90 % by weight of the mixture including 30 % by weight of the infusible preliminarily carbonized carbonaceous fiber as the reinforcement and 70 % by weight of the self-sintering carbonaceous powder comprising the coal tar mesocarbon microbeads having the average particle diameter of 7 µm and working as the binder, and resulting mixtures were molded and sintered in the same manner as above-mentioned. The other sliding members of Example 7 were thus obtained.

### (Example 8)

In the sliding members of Example 8, boron nitride powders of the average particle diameters of 2.0 µm (produced by Kyoritsu Yogyo Co., Ltd.) , 0.6 µm (produced by Shin-etsu Kagaku Co., Ltd.), and 9.3 µm (produced by Shin-etsu Kagaku Co., Ltd.) were employed as the boron compound powder. Other than the addition of the boron nitride powders, the sliding members of Example 8 were prepared in the same manner as Example 7.

### (Example 9)

In the sliding members of Example 9, chromium boride powders of the average particle diameters of 1.8 µm (produced by Nihon Shin Kinzoku Co., Ltd.) and 4.4 µm (produced by Nihon Shin Kinzoku Co., Ltd.) were employed as the boron compound powder. Other than the addition of the chromium boride powders, the sliding members of Example 9 were prepared in the same manner as Example 7.

### (Example 10)

In the sliding members of Example 10, titanium boride powders of the average particle diameters of 1.4 µm (produced by Nihon Shin Kinzoku Co., Ltd.) and 5.0 µm (produced by Kyoritsu Yogyo Co., Ltd.) were employed as the boron compound powder. Other than the addition of the titanium boride powders, the sliding members of Example 10 were prepared in the same manner as Example 7.

### (Example 11)

In the sliding member of Example 11, tantalum boride powder of the average particle diameter of 0.7 µm (produced by Nihon Shin Kinzoku Co., Ltd.) was employed as the boron compound powder. Other than the addition of the tantalum boride powder, the sliding member of Example 11 was prepared in the same manner as Example 7.

### (Example 12)

In the sliding members of Example 12, zirconium boride powders of the average particle diameters of 2.0 µm (produced by Nihon Shin Kinzoku Co., Ltd.) and 4.0 µm (produced by Nihon Shin Kinzoku Co., Ltd.) were employed as the boron compound powder. Other than the addition of the zirconium boride powders, the sliding members of Example 12 were prepared in the same manner as Example 7.

### (Comparative Examples 3 through 5)

Seventy parts by weight of the self-sintering carbonaceous powder comprising the coal tar mesocarbon microbeads having the average particle diameter of 7 µm and employed as the binder in Example 7 was only added to 30 parts by weight of the infusible preliminarily carbonized carbonaceous fiber working as the reinforcement to make a composite body. Other than this arrangement, namely other than that the composite body is free from the boron compound powder, the sliding member of Comparative Example 3 was prepared in the same manner as Example 7.

Further, the sliding members of Comparative Examples 4 and 5 were prepared, and they were respectively made from a commercially available conventional carbon fiber reinforced carbon material (produced by Diahitoco Co., Ltd.) and S45C steel material (as per JIS) . The commercially available conventional carbon fiber reinforced carbon material was one made by impregnating petroleum pitch into carbonaceous fiber and thereafter sintering them at 2000 °C in an inert gas atmosphere.

### (Evaluation 5)

The sliding members of Examples 1 through 5 and Comparative Examples 3 through 5 were evaluated on their anti-seizure properties under no lubrication condition, and the evaluation was carried out with the machine testing laboratory type friction/abrasion tester in a manner similar to Evaluation 3 under the following conditions:
No lubrication;
Speed of 160 rpm;
Load increasing at the rate of 10 kgf per 2 minutes; and
Mating member made of SUJ2.
The friction coefficients ( µ) of the sliding members were also measured at the loads of 100 kgf/cm² and 150 kgf/cm². The results of the measurements are shown in Table 2.

It is apparent from Table 2 that the sliding

**TABLE 2**

| | Boron Compound Powder | Par. Dia. (µm) | Addi. Amount (% by weight) | Load at Seizure (kgf) | Friction Coefficient (µ) | |
|---|---|---|---|---|---|---|
| | | | | | at 200kgf | at 300kgf |
| Ex. 7 | Boron Carbide | 1.9 | 5 | 325 | 0.085 | 0.072 |
| | | | 10 | 350 | 0.081 | 0.062 |
| | | 5.0 | 5 | 250 | 0.087 | - |
| | | | 10 | 300 | 0.077 | 0.067 |
| | | 0.5 | 5 | 300 | 0.077 | 0.063 |
| | | | 10 | 475 | 0.075 | 0.060 |
| Ex. 8 | Boron Nitride | 2.0 | 5 | 275 | 0.113 | - |
| | | | 10 | 325 | 0.095 | 0.073 |
| | | 0.6 | 5 | 275 | 0.119 | - |
| | | | 10 | 300 | 0.089 | 0.068 |
| | | 9.3 | 5 | 300 | 0.109 | 0.082 |
| | | | 10 | 325 | 0.096 | 0.074 |
| Ex. 9 | Chromium Boride | 1.8 | 5 | 275 | 0.116 | - |
| | | | 10 | 350 | 0.113 | 0.096 |
| | | 4.4 | 5 | 300 | 0.120 | 0.093 |
| | | | 10 | 250 | 0.134 | 0.115 |
| Ex. 10 | Titanium Boride | 1.4 | 5 | 225 | 0.124 | - |
| | | | 10 | 350 | 0.089 | 0.068 |
| | | 5.0 | 5 | 240 | 0.118 | - |
| | | | 10 | 320 | 0.095 | 0.070 |
| Ex. 11 | Tantalum Boride | 0.7 | 5 | - | - | - |
| | | | | | | |
| | | | 10 | 350 | 0.117 | 0.091 |
| Ex. 12 | Zirconium Boride | 2.0 | 5 | 325 | 0.095 | 0.090 |
| | | | 10 | 400 | 0.090 | 0.066 |
| | | 4.0 | 5 | 275 | 0.151 | - |
| | | | 10 | 250 | 0.106 | - |
| Com. Ex. 3 | | | | 70∼90 | 0.2∼0.4(at 50∼80kgf) | |
| Com. Ex. 4 (Commercially Available Material) | | | | 110∼150 | 0.2∼0.4(at 100∼120kgf) | |
| Com. Ex. 5 (S45 steel) | | | | 20∼40 | | |

members of Examples 7 through 12 had improved anti-seizure properties when compared with the sliding members of Comparative Examples 3, 4 and 5. Moreover, the values of the friction coefficients (µ) of the sliding members of Examples 7 through 12 were suppressed less than the sliding members of Comparative Examples 3, 4 and 5. This is assumed as follows: The boron compound powders were exposed to a high temperature, and thermally decomposed to produce the liquid phase thereof on the sliding surfaces of the sliding members of Examples 7 through 12 under no lubrication condition.

### (Evaluation 6)

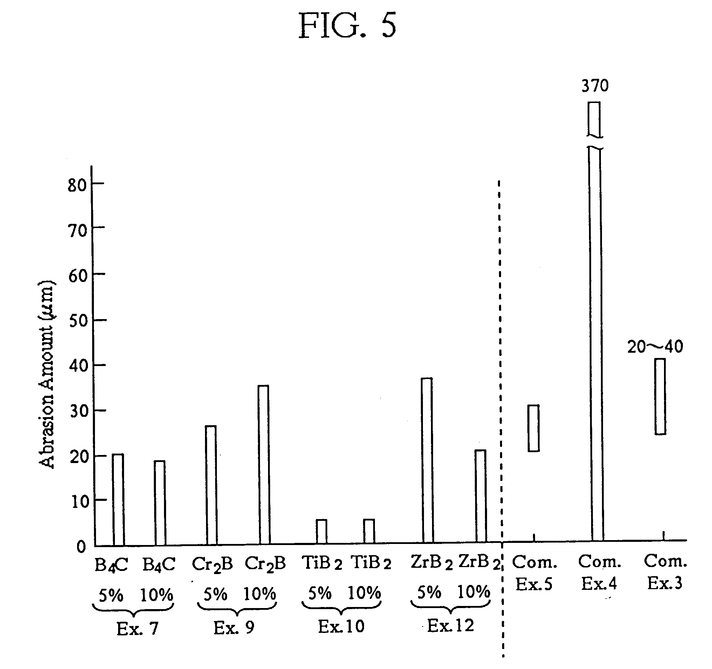

The sliding members of Examples 7, 9, 10 and 12 and Comparative Examples 3, 4 and 5 were evaluated on their abrasion resistance under oil lubrication condition. An abrasion test similar to Evaluation 4 was carried out to evaluate their abrasion resistance. The results of the measurement are shown in Figure 5.

As can be seen from Figure 5, the sliding members of Examples 7, 9, 10 and 12 had remarkably improved abrasion resistance with respect to the sliding member of Comparative Example 4 comprising the commercially available carbon fiber reinforced carbon material. The improvement is believed to result from the same reason that the abrasion resistance of the sliding members of Examples 1 through 6 was improved.

### (Example 13)

In the sliding members of Example 13, the following 6 kinds of boride were employed as the inorganic powder, other than the addition of the boride, the sliding members of Example 13 were prepared in the same manner as Example 1. Namely, CoB having the average particle diameter of 4.6 µm, B₄C having the average particle diameter of 1.9 µm (employed in Example 7), TiB having the average particle diameter of 1.4 µm (employed in Example 10) , ZrB₂ having the average particle diameter of 2.0 µm (employed in Example 12), BN having the average particle diameter of 9.3 µm (employed in Example 8) and TaB₂ having the average particle diameter of 0.7 µm (employed in Example 11) were employed as the powder. Besides, the addition amounts of these 6 kinds of inorganic boride were all set at 5 % by weight.

### (Example 14)

In the sliding members of Example 14, the following 3 kinds of inorganic carbide were employed, other than the addition of the inorganic carbide, the sliding members of Example 14 were prepared in the same manner as Example 1. Namely, TiC having the average particle diameter of 1.5 µm, TaC having the average particle diameter of 1.9 µm, and ZrC having the average particle diameter of 0.8 µm were employed as the inorganic powder. Besides, the addition amounts of these 3 kinds of inorganic carbide were all set at 5 % by weight.

### (Example 15)

In the sliding members of Example 15, the following 5 kinds of inorganic nitride were employed, other than the addition of the inorganic nitride, the sliding members of Example 15 were prepared in the same manner as Example 1. Namely, TiN having the average particle diameter of 1.3 µm, TiN having the average particle diameter of 0.5 µm, AlN having the average particle diameter of 1.4 µm, Cr₂N having the average particle diameter of 4 µm, and TaN having the average particle diameter of 3 µm were employed as the inorganic powder. Besides, the addition amounts of these 5 kinds of inorganic nitride were all set at 5 % by weight.

### (Example 16)

In the sliding members of Example 16, the following 3 kinds of inorganic oxide were employed, other than the addition of the inorganic oxide, the sliding members of Example 16 were prepared in the same manner as Example 1. Namely, TiO₂ having the average particle diameter of 3 µm, Al₂O₃ having the average particle diameter of 0.5 µm (employed in Examples 1 and 2), and MgO having the average particle diameter of 0.6 µm were employed as the inorganic powder. Besides, the addition amounts of these 3 kinds of inorganic oxide were all set at 5 % by weight.

### (Evaluation 7)

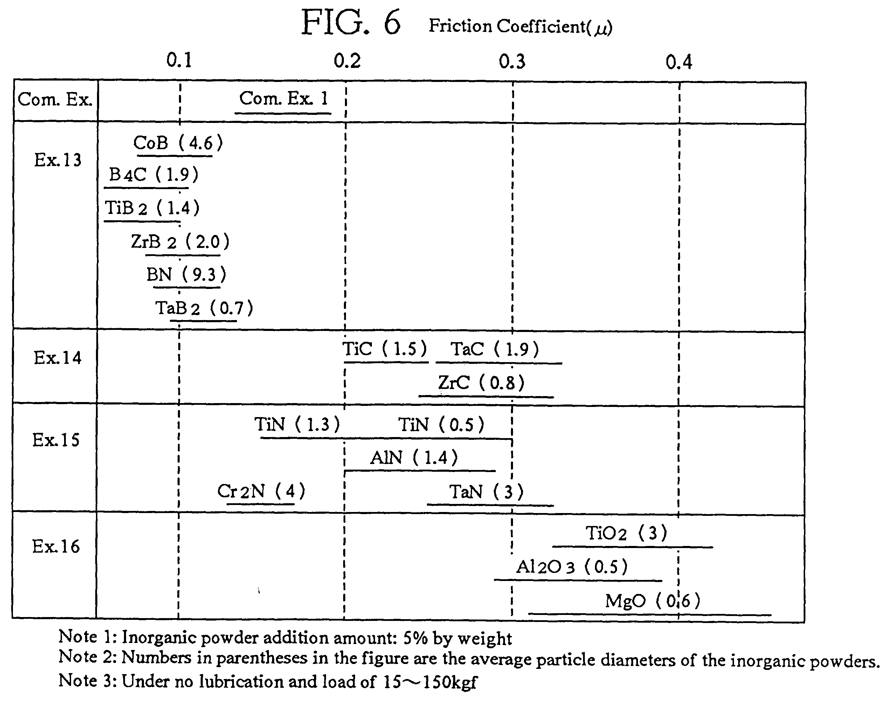

The 6 sliding members of Example 13, the 3 sliding members of Example 14, the 5 sliding members of Example 15, and the 3 sliding members of Example 16 prepared in the above-mentioned manner were evaluated on their friction coefficient (µ) properties under no lubrication condition. The evaluation was carried out similarly to Evaluation 2 to measure their friction coefficients (µ), but under no lubrication condition. Here, the load was varied in the range of 25 to 75 kgf/cm². The results of the measurement are shown in Figure 6. The positions of the horizontal line segments in Figure 6 specify the friction coefficients (µ).

It is readily understood from Figure 6 that the values of the friction coefficients (µ) of the sliding members thus obtained can be controlled in the range of about 0.05 to 0.5 by employing various kinds of inorganic powders.

For instance, in the sliding members of Example 13 employing the inorganic boride as the inorganic powder, their friction coefficients (µ) fall in the range of about 0.05 to 0.2. In the sliding members of Example 14 employing the inorganic carbide as the inorganic powder, their friction coefficients (µ) fall in the range of about 0.15 to 0.35. In the sliding members of Example 15 employing the inorganic nitride as the inorganic powder, their friction coefficients (µ) fall in the range of about 0.1 to 0.35. Finally, in the sliding members of Example 16 employing the inorganic oxide as the inorganic powder, their friction coefficients (µ) fall in the range of about 0.25 to 0.5. Consequently, an optimum friction coefficient (µ) can be selected freely as required in accordance with an application of a sliding member.

Moreover, the addition amounts of a total of 17 inorganic powders employed in Examples 13 through 16 were increased to 10 % by weight, and another 17 sliding members were prepared anew. The same evaluation test was carried out on the other 17 sliding members. It was found that the other 17 sliding members exhibited friction coefficients (µ) substantially identical to those of the above-mentioned 17 sliding members of Examples 13 through 16.

### (Examples 17 through 22)

In the sliding members of Examples 17 through 22, BN was employed as the inorganic powder, other than the addition of BN, the sliding members of Example 17 through 22 were prepared in the same manner as Example 1. When preparing the sliding members of Example 17 and 18, BN having the average particle diameter of 0.6 µm (employed in Example 8) was employed, and the addition amounts were set at 5 and 10 % by weight respectively. Further, when preparing the sliding members of Example 19 and 20, BN having the average particle diameter of 2 µm (employed in Example 8) was employed, and the addition amounts were set at 5 and 10 % by weight respectively. Moreover, when preparing the sliding members of Example 21 and 22, BN having the average particle diameter of 9.3 µm (employed in Example 8) was employed, and the addition amounts were set at 5 and 10 % by weight respectively.

### (Evaluation 8)

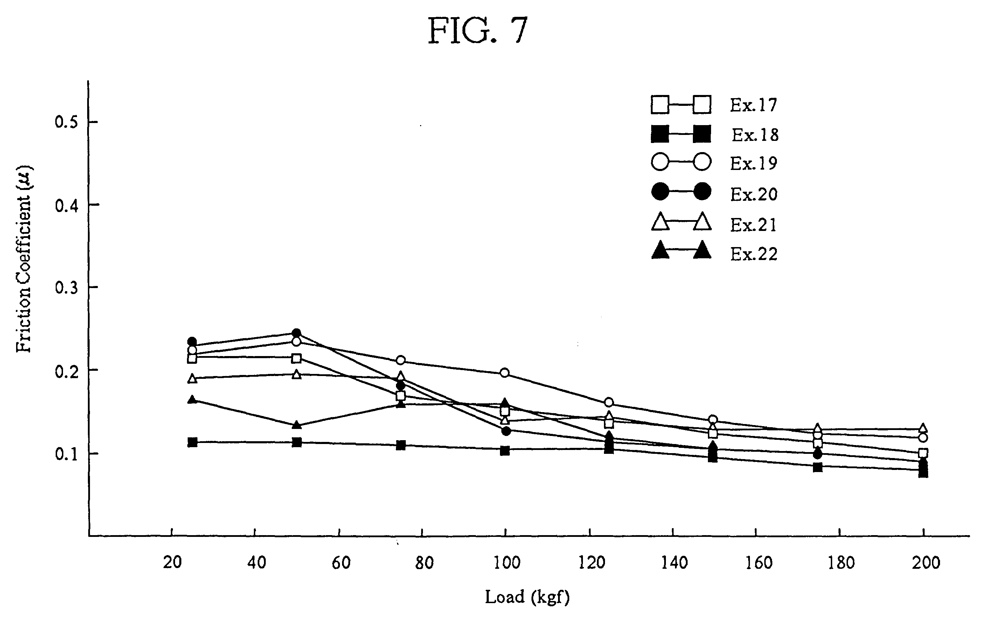

The thus prepared 6 sliding members of Examples 17 through 22 in total were evaluated on their friction coefficient (µ) properties under no lubrication condition by carrying out an evaluation test identical to Evaluation 1. The results are shown in Figure 7.

It is apparent from Figure 7 that the 6 sliding members of Examples 17 through 22 exhibited stable friction coefficients (µ) over a wide range of loads. It is believed that the added inorganic powder exerted a mechanical resistance force between the sliding member and the mating member in a manner similar to those of the above-mentioned sliding members of Examples 1 through 4.

### (Examples 23 through 30)

Eight sliding members of Examples 23 through 30 were prepared in the same manner as Example 1 except that Al₂O₃ was employed as the inorganic powder in the sliding members of Examples 23 through 26 and that TiB₂ was employed as the inorganic powder in the sliding members of Example 27 through 30. When preparing the sliding members of Examples 23 and 24 (identical to Examples 1 and 2), Al₂O₃ having the average particle diameter of 0.5 µm was employed, and the addition amounts were set at 5 and 10 % by weight respectively, and when preparing the sliding members of Examples 25 and 26 (identical to Examples 3 and 4), Al₂O₃ having the average particle diameter of 4 µm was employed, and the addition amounts were set at 5 and 10 % by weight respectively. On the other hand, when preparing the sliding members of Example 27 and 28, TiB having the average particle diameter of 1.4 µm (employed in Example 10) was employed, and the addition amounts were set at 5 and 10 % by weight respectively, and when preparing the sliding members of Example 29 and 30, TiB₂ having the average particle diameter of 4 µm was employed, and the addition amounts were set at 5 and 10 % by weight respectively.

### (Evaluation 9)

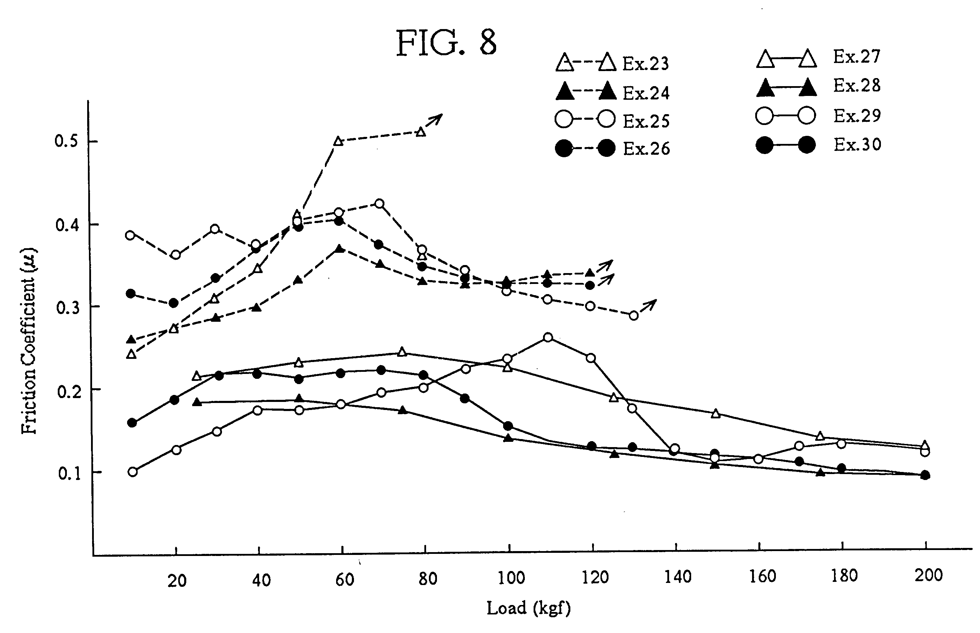

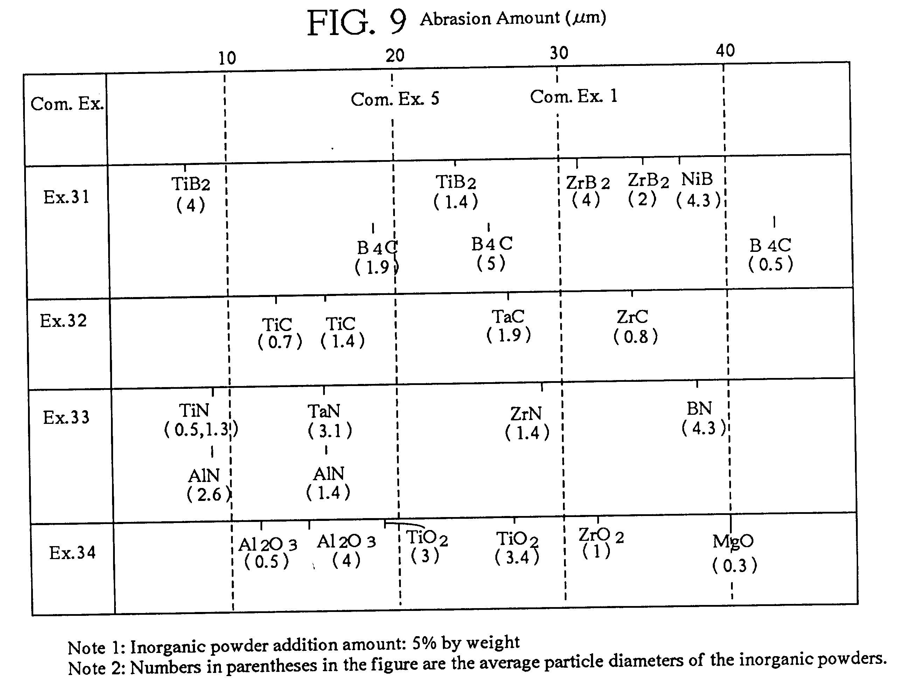

The thus prepared 8 sliding members of Examples 23 through 30 in total were evaluated on their friction coefficient (µ) properties under no lubrication condition by carrying out an evaluation test identical to Evaluation 1. The results are shown in Figure 8.

It is apparent from Figure 8 that the 4 sliding members of Examples 23 through 26 had the friction coefficients (µ) having the tendency to increase under the high load of more than 140 kgf. However, except the sliding member of Example 25, the sliding members of Examples 23, 24 and 26 exhibited relatively stable friction coefficients (µ) in the load range of 10 to 60 kgf/cm².On the other hand, the 4 sliding members of Examples 27 through 30 which employed TiB₂ as the inorganic powder were found to exhibit stable friction coefficients (µ) over a wide range of loads. These properties on the friction coefficients (µ) are similar to those of the sliding members of Examples 1 through 4, and it is also believed that a mechanical resistance force was exerted between the added inorganic powder and the mating member.

### (Example 31)

In the sliding members of Example 31, the following 8 kinds of inorganic boride were employed, other than the addition of the inorganic boride, the 8 sliding members of Example 31 were prepared in the same manner as Example 1. Namely, TiB₂ having the average particle diameter of 4 µm (employed in Examples 29 and 30), TiB₂ having the average particle diameter of 1.4 µm (employed in Example 10), ZrB₂ having the average particle diameter of 4 µm (employed in Example 12), ZrB₂ having the average particle diameter of 2 µm (employed in Example 12), NiB₂ having the average particle diameter of 4.3 µm, B₄C having the average particle diameter of 1.9 µm (employed in Example 7), B₄C having the average particle diameter of 5 µm (employed in Example 7), and B₄C having the average particle diameter of 0.5 µm (employed in Example 7) were employed as the inorganic powder. Besides, the addition amounts of these 8 kinds of inorganic boride were all set at 5 % by weight.

### (Example 32)

In the sliding members of Example 32, the following 4 kinds of inorganic carbide were employed, other than the addition of the inorganic carbide, the 4 sliding members of Example 32 were prepared in the same manner as Example 1. Namely, TiC having the average particle diameter of 0.7 µm, TiC having the average particle diameter of 1.4 µm, TaC having the average particle diameter of 1.9 µm (employed in Example 14), and ZrC having the average particle diameter of 0.8 µm (employed in Example 14) were employed as the inorganic powder. Besides, the addition amounts of these 4 kinds of inorganic carbide were all set at 5 % by weight.

### (Example 33)

In the sliding members of Example 33, the following 7 kinds of inorganic nitride were employed, other than the addition of the inorganic nitride, the 7 sliding members of Example 33 were prepared in the same manner as Example 1. Namely, TiN having the average particle diameter of 0.5 µm (employed in Example 15), TiN having the average particle diameter of 1.3 µm (employed in Example 15) , TaN having the average particle diameter of 3.1 µm, ZrN having the average particle diameter of 1.4 µm, BN having the average diameter of 4.3 µm, AlN having the average particle diameter of 2.6 µm, and AlN having the average particle diameter of 1.4 µm (employed in Example 15) were employed as the inorganic powder. Besides, the addition amounts of these 7 kinds of inorganic nitride were all set at 5 % by weight.

### (Example 34)

In the sliding members of Example 34, the following 6 kinds of inorganic oxide were employed, other than the addition of the inorganic oxide, the 6 sliding members of Example 34 were prepared in the same manner as Example 1. Namely, Al₂O₃ having the average particle diameter of 0.5 µm (employed in Examples 1 and 2), Al₂O₃ having the average particle diameter of 4 µm (employed in Examples 3 and 4), TiO₂ having the average particle diameter of 3 µm (employed in Example 16), TiO₂ having the average diameter of 3.4 µm, ZrO₂ having the average diameter of 1 µm, and MgO having the average particle diameter of 0.3 µm were employed as the inorganic powder. Besides, the addition amounts of these 6 kinds of inorganic oxide were all set at 5 % by weight.

### (Evaluation 10)

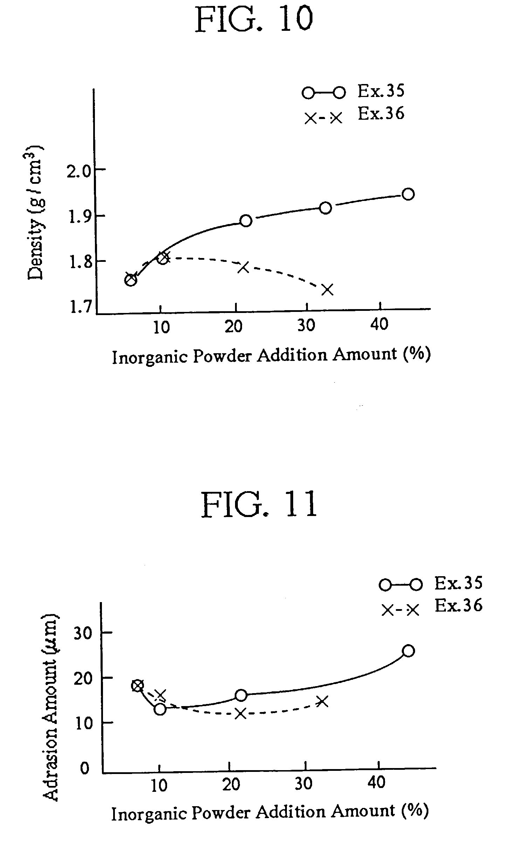

The B sliding members of Example 31, the 4 sliding members of Example 32, the 7 sliding members of Example 33, and the 6 sliding members of Example 34 prepared in the above-mentioned manner were evaluated on their abrasion resistance under oil lubrication condition. The evaluation was carried out similarly to Evaluation 4. The results of the measurement are shown in Figure 9. The positions of the vertical short line segments specify the abrasion amounts.

It is readily understood from Figure 9 that the 25 sliding members of Examples 31 through 34 in total exhibited the abrasion amounts equivalent to or as less as approximately one-third of the abrasion amount exhibited by the sliding member of Comparative Example 1. As earlier mentioned, the sliding member of Comparative Example 1 was prepared for evaluating the sliding members of Examples 1 through 6, composed of the composite body including 30 parts by weight of the tar-treated infusible preliminarily carbonized carbonaceous fiber as the reinforcement and 70 parts by weight of the self-sintering carbonaceous powder only added thereto, and prepared by sintering the composite body free from the addition of the inorganic powder. The self-sintering carbonaceous powder comprised the coal tar mesocarbon microbeads of the average particle diameter of 7 µm and worked as the binder.

Moreover, according to the result of the same evaluation test done on the sliding member of Comparative Example 2 made from the commercially available conventional carbon-carbon composite material, the sliding member of Comparative Example 2 exhibited the abrasion amount of 370 µm. Accordingly, all of the 25 sliding members of Examples 31 through 34 were exhibited the abrasion amounts as less as approximately one-tenth to one-fortieth of the abrasion amount exhibited by the sliding member of Comparative Example 2. Thus, the abrasion resistance of the sliding members of Examples 31 through 34 was found to be remarkably improved.

### (Examples 35 and 36)

The sliding members of Examples 35 and 36 were prepared in the same manner as Example 1 except that TiB₂ was employed as the inorganic powder in the sliding member of Examples 35 and that B₄C was employed as the inorganic powder in the sliding member of Example 36. When preparing the sliding member of Example 35, TiB₂ having the average particle diameter of 1.0 µm was employed, the addition amount was varied variously, and the measurements on the density, the abrasion amount and the bending strength were carried out as described in the following Evaluation 11. Likewise, when preparing the sliding member of Example 36, B₄C having the average particle diameter of 0.5 µm (employed in Example 7) was employed, the addition amount was varied variously, and the measurements on the density, the abrasion amount and the bending strength were carried out similarly to the sliding member of Example 35 in the following Evaluation 11.

### (Evaluation 11)

The results of the measurements on the densities of the Examples 35 and 36 are illustrated in Figure 10. According to Figure 10, in the sliding member of Example 36 employing B₄C as the inorganic powder, the density thereof exhibited the maximum value when the addition amount of B₄C was approximately 10 % by weight. On the contrary, in the sliding member of Example 35 employing TiB₂ as the inorganic powder, the density thereof had a tendency to increase as the TiB addition amount increased.

The sliding members of Examples 35 and 36 were evaluated on their abrasion resistance, i.e., their abrasion amounts, by carrying out an abrasion test similar to Evaluation 4. The results of the evaluation are illustrated in Figure 11. As can be seen from Figure 11, both of the sliding members of Examples 35 and 36 had a tendency to exhibit the abrasion amounts of the minimum values when the inorganic powder addition amounts reached predetermined values.

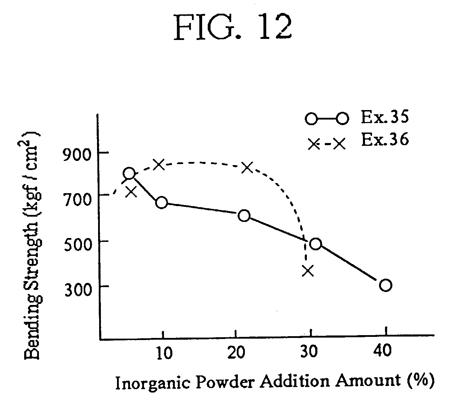

The sliding members of Examples 35 and 36 were molded into test pieces having the size of 10 mm in length x 30 mm in width x 10 mm in thickness. Then, the cross head speed was set at 1 mm/min., and the loads at the time of the breakage of the test pieces were measured in order to evaluate the bending strength of the sliding members of Examples 35 and 36. The results of the measurement are illustrated in Figure 12. As can be seen from Figure 12, the bending strength of the sliding members of Examples 35 and 36 decreased as the inorganic powder addition amounts increased. Accordingly, it is necessary to select an appropriate inorganic powder addition amount and give a sliding member optimum bending strength depending on an application of a sliding member.

### (Example 37)

In the sliding members of Example 37, the following 2 kinds of inorganic aluminum compound were employed, other than the addition of the inorganic aluminum compound, the sliding members of Example 37 were prepared in the same manner as Example 1. Namely, Al₂O₃ and AlN were employed as the inorganic powder. As for Al₂O₃, one having the average particle diameter of 0.5 µm (employed in Examples 1 and 2) and the other having the average particle diameter of 4.0 µm (employed in Examples 3 and 4) were prepared, and the addition amounts of the Al₂O₃ powders having these 2 kinds of average particle diameters were set at 5 as well as 10 % by weight. Similarly, as for AlN, one having the average particle diameter of 1.4 µm (employed in Example 15) and the other having the average particle diameter of 2.6 µm (employed in Example 33) were prepared, and the addition amounts of the AlN powders having these 2 kinds of average particle diameters were set at 5 as well as 10 % by weight.

### (Example 38)

In the sliding members of Example 38, the following 2 kinds of inorganic boron compound were employed, other than the addition of the inorganic boron compound, the sliding members of Example 38 were prepared in the same manner as Example 1. Namely, B₄C and BN were employed as the inorganic powder. As for B₄C, one having the average particle diameter of 0.5 µm, the other having the average particle diameter of 1.9 µm and still another having the average particle diameter of 5.0 µm were prepared (all employed in Example 7), and the addition amounts of the B₄C powders having these 3 kinds of average particle diameters were set at 5 as well as 10 % by weight. Similarly, as for BN, one having the average particle diameter of 0.6 µm, the other having the average particle diameter of 2.0 µm and still another having the average particle diameter of 9.3 µm were prepared (all employed in Example 8), and the addition amounts of the BN powders having these 3 kinds of average particle diameters were set at 5 as well as 10 % by weight.

### (Example 39)

In the sliding member of Example 39, the cobalt compound (CoB) was employed as the inorganic powder, other than the addition of the cobalt compound, the sliding member of Example 39 was prepared in the same manner as Example 1. Namely, CoB having the average particle diameter of 4.6 µm (employed in Example 13) was prepared, and the addition amount of the CoB powder was set at 5 as well as 10 % by weight.

### (Example 40)

In the sliding members of Example 40, the following 2 kinds of inorganic chromium compound were employed, other than the addition of the inorganic chromium compound, the sliding members of Example 40 were prepared in the same manner as Example 1. Namely, Cr₂N and Cr₂B were employed as the inorganic powder. Cr₂N having the average particle diameter of 3.9 µm was prepared, and the addition amount of the Cr₂N powder was set at 5 as well as 10 % by weight. As for Cr₂B, one having the average particle diameter of 1.8 µm and the other having the average particle diameter of 4.4 µm were prepared (all employed in Example 9), and the addition amounts of the Cr₂B powders having these 2 kinds of average particle diameters were set at 5 as well as 10 % by weight.

### (Example 41)

In the sliding members of Example 41, the following 2 kinds of inorganic magnesium compound were employed, other than the addition of the inorganic magnesium compound, the sliding members of Example 41 were prepared in the same manner as Example 1. Namely, MgB₂ and MgO were employed as the inorganic powder. MgB having the average particle diameter of 0.5 µm was prepared, and the addition amount of the MgB₂ powder was set at 5 as well as 10 % by weight. As for MgO, one having the average particle diameter of 0.2 µm, the other having the average particle diameter of 0.35 µm and still another having the average particle diameter of 0.6 µm (employed in Example 16) were prepared, and the addition amounts of the MgO powders having these 3 kinds of average particle diameters were set at 5 as well as 10 % by weight.

### (Example 42)

In the sliding member of Example 42, the inorganic nickel compound (NiB) was employed, other than the addition of the inorganic nickel compound, the sliding member of Example 42 was prepared in the same manner as Example 1. Namely, NiB having the average particle diameter of 4.3 µm (employed in Example 31) was prepared, and the addition amount of the NiB powder was set at 5 as well as 10 % by weight.

### (Example 43)

In the sliding members of Example 43, the following 3 kinds of inorganic tantalum compound were employed, other than the addition of the inorganic tantalum compound, the sliding members of Example 43 were prepared in the same manner as Example 1. Namely, TaC, TaN and TaB₂ were employed as the inorganic powder. TaC having the average particle diameter of 1.9 µm (employed in Example 14) was prepared, and the addition amount of the TaC powder was set at 5 as well as 10 % by weight. Similarly, TaN having the average particle diameter of 3.1 µm (employed in Example 33) was prepared, and the addition amount of the TaN powder was set at 5 as well as 10 % by weight. Likewise, TaB₂ powder having the average particle diameter of 0.7 µm (employed in Example 11) was prepared, and the addition amount of the TaB₂ powder was set at 5 as well as 10 % by weight.

### (Example 44)

In the sliding members of Example 44, the following 4 kinds of inorganic titanium compound were employed, other than the addition of the inorganic titanium compound, the sliding members of Example 44 were prepared in the same manner as Example 1. Namely, TiO₂, TiC, TiN and TiB₂ were employed as the inorganic powder. As for TiO₂, one having the average particle diameter of 0.4 µm and the other having the average particle diameter of 3.3 µm were prepared, and the addition amounts of the TiO₂ powders having these 2 kinds of average particle diameters were set at 5 as well as 10 % by weight. Similarly, as for TiC, one having the average particle diameter of 0.7 µm and the other having the average particle diameter of 1.4 µm were prepared (all employed in Example 32), and the addition amounts of the TiC powders having these 2 kinds of average particle diameters were set at 5 as well as 10 % by weight. Likewise, as for TiN, one having the average particle diameter of 0.5 µm and the other having the average particle diameter of 1.3 µm were prepared (all employed in Example 15), and the addition amounts of the TiN powders having these 2 kinds of average particle diameters were set at 5 as well as 10 % by weight. Finally, as for TiB₂, the first one having the average particle diameter of 1.0 µm, the second one having the average particle diameter of 1.4 µm (employed in Example 10), the third one having the average particle diameter of 2.3 µm and the fourth one having the average particle diameter of 4.0 µm (employed in Examples 29 and 30) were prepared, and the addition amounts of the TiB₂ powders having these 4 kinds of average particle diameters were set at 5 as well as 10 *%* by weight.

### (Example 45)

In the sliding members of Example 45, the following 4 kinds of inorganic zirconium compound were employed, other than the addition of the inorganic zirconium compound, the sliding members of Example 45 were prepared in the same manner as Example 1. Namely, ZrO₂, ZrC, ZrN and ZrB₂ were employed as the inorganic powder. ZrO₂ having the average particle diameter of 1.0 µm (employed in Example 34) was prepared, and the addition amount of the ZrO powder was set at 5 as well as 10 % by weight. Similarly, ZrC having the average particle diameter of 0.8 µm (employed in Example 14) was prepared, and the addition amount of the ZrC powder was set at 5 as well as 10 % by weight. Likewise, ZrN having the average particle diameter of 1.4 µm (employed in Example 33) was prepared, and the addition amount of the ZrN powder was set at 5 as well as 10 % by weight. Finally, as for ZrB₂, one having the average particle diameter of 2.0 µm and the other having the average particle diameter of 4.0 µm were prepared (all employed in Example 12), and the addition amounts of the ZrB₂ powders having these 2 kinds of average particle diameters were set at 5 as well as 10 % by weight.

### (Example 46)

Two kinds of sliding members of Example 46 were prepared in the same manner as Example 1 except that Al₂O₃ fiber and ZrO₂ fiber were employed as the inorganic fiber in the sliding members of Example 46. Al₂O₃ fiber having the fiber length of 0.5 mm and the fiber diameter of 5 µm was prepared, and the addition amount of the Al₂O₃ fiber was set at 5 as well as 10 % by weight. Likewise, ZrO₂ fiber having the fiber length of 0.5 mm and the fiber diameter of 5 µm (employed in Examples 5 and 6) was prepared, and the addition amount of the ZrO₂ fiber was set at 5 as well as 10 % by weight.

### (Evaluation 12)

First, the densities of the sliding members of Examples 37 through 46 thus prepared were measured. Then, the loads at seizure thereof were measured under no lubrication condition by carrying a test similar to Evaluation 3. Further, the abrasion resistance, i.e., the abrasion amounts thereof, was measured under oil lubrication condition by carrying out a test similar to Evaluation 4. Finally, the bending strength thereof was measured by carrying out a test similar to the bending strength test of Evaluation 11. The results of these measurements are summarized in Table 3.

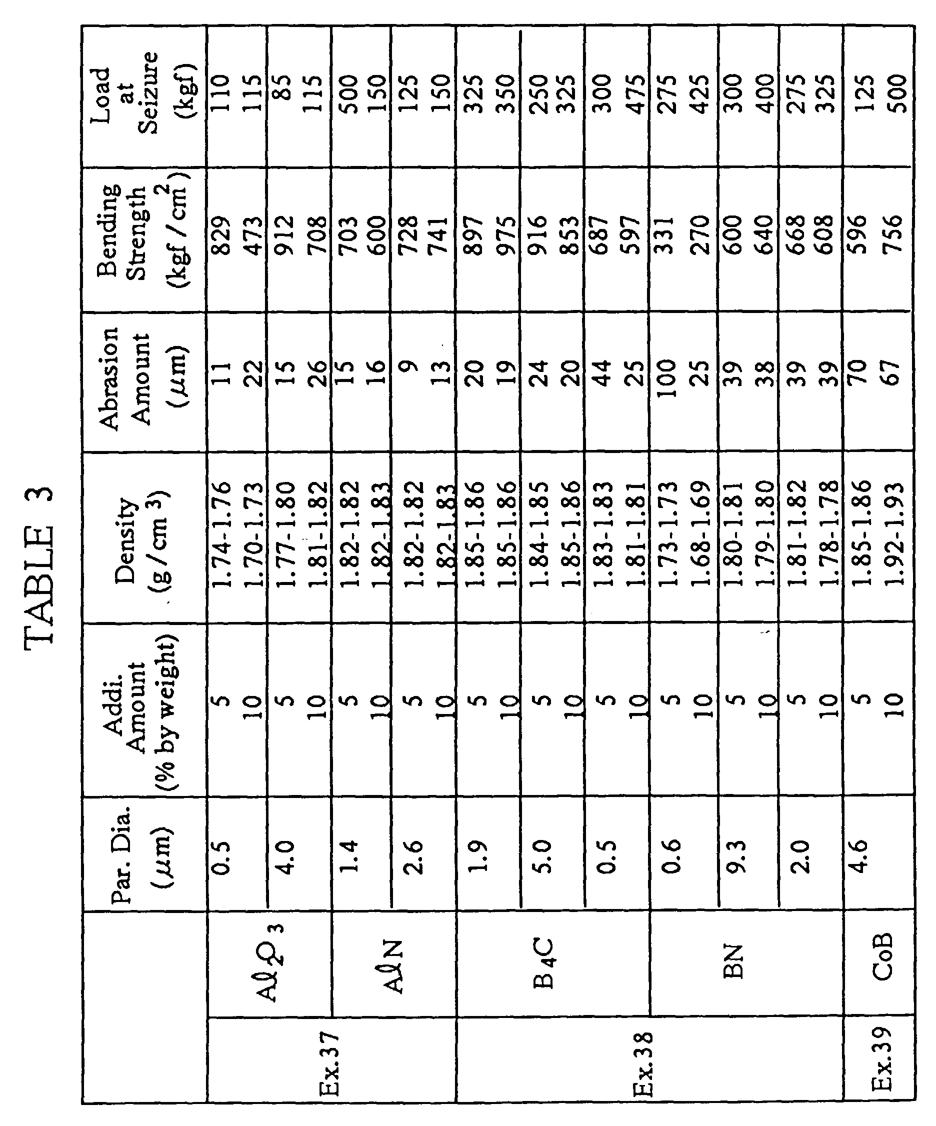

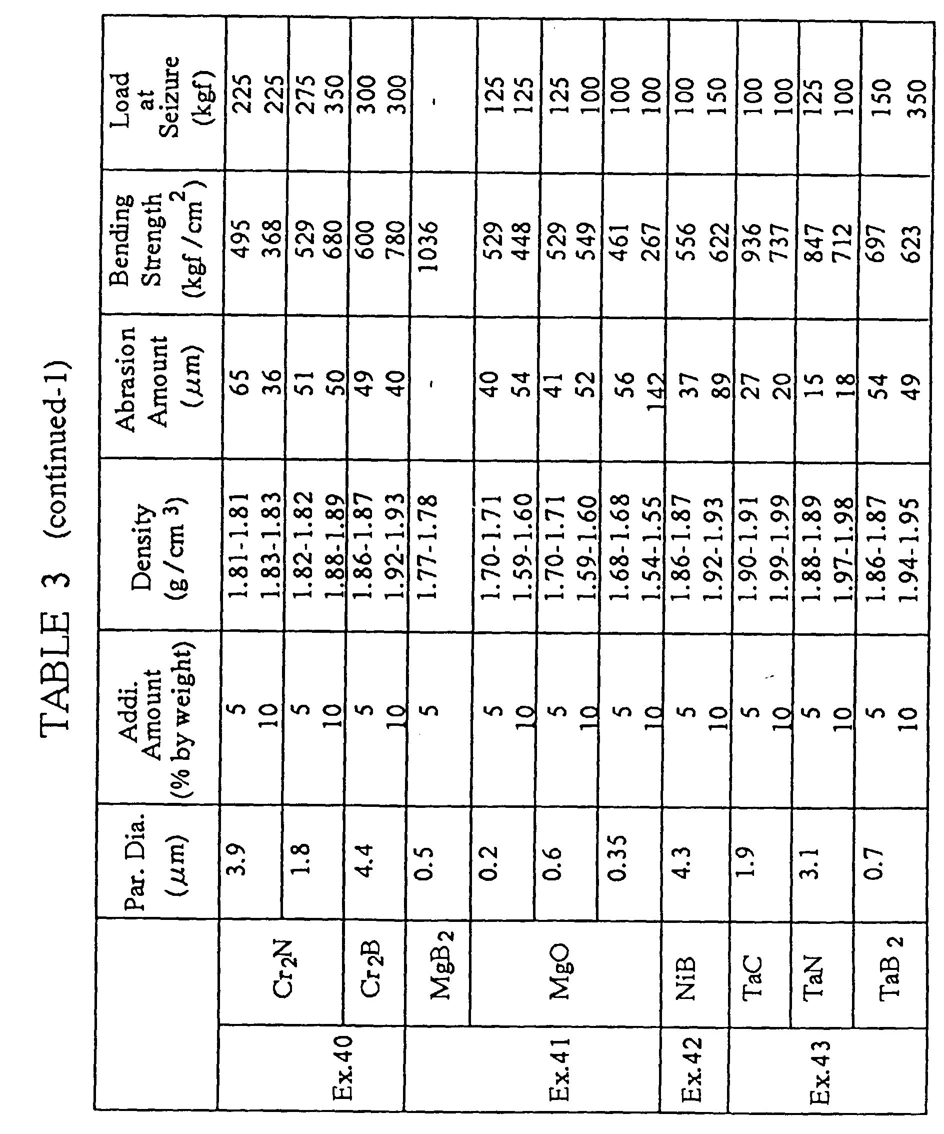

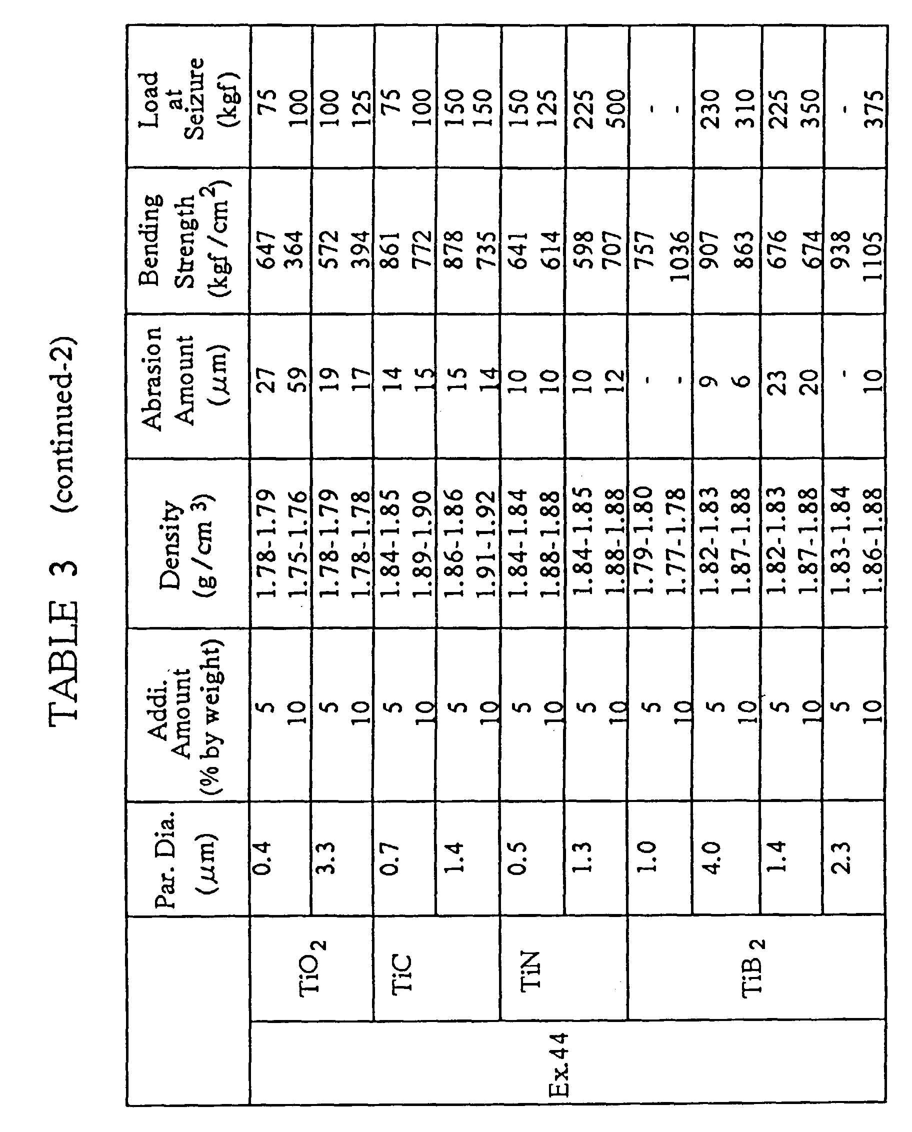

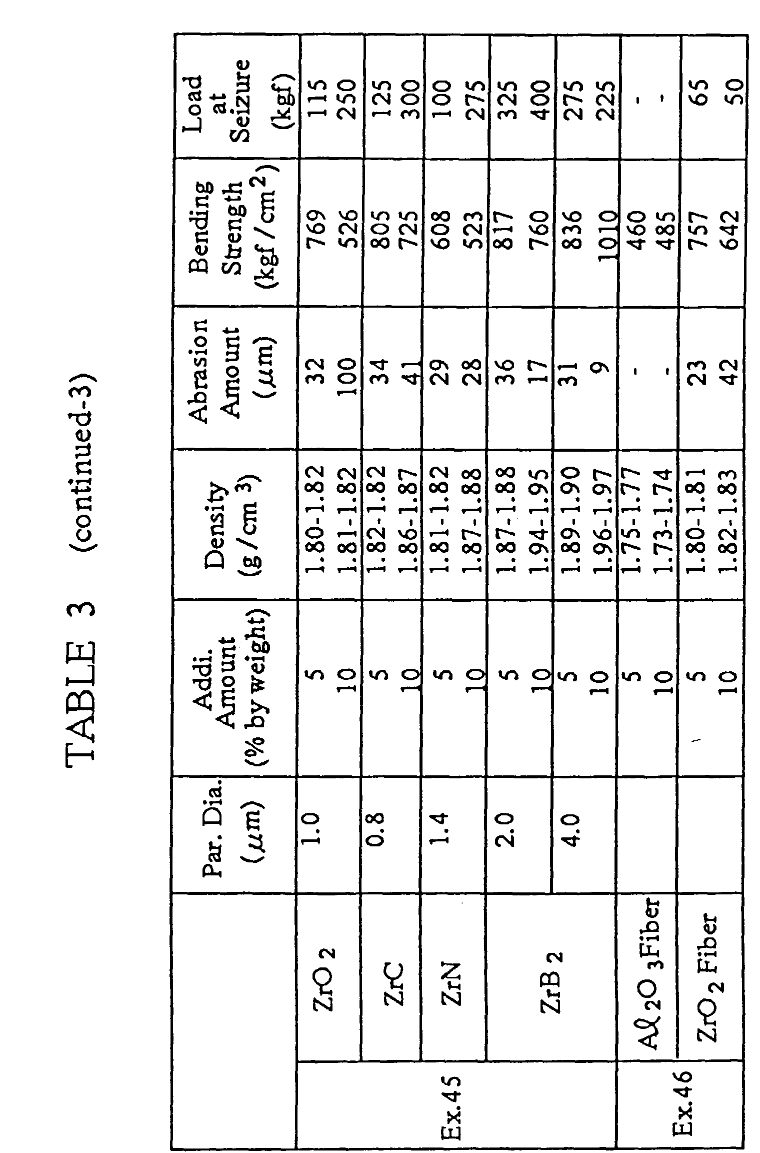

### (Example 47)

The following raw materials were prepared: 28.6 % by weight of infusible preliminarily carbonized carbonaceous fiber having the fiber diameter of 15 µm and the fiber length of 0.5 mm and comprising the coal optically isotropic pitch identical to the one employed in Example 1, 66.5 % by weight of self-sintering carbonaceous powder comprising the mesocarbon microbeads having the average particle diameter of 6 µm identical to the one employed in Example 1, and 5 % by weight of Ti powder having the average particle diameter of 8 µm. The above-mentioned raw materials were mixed uniformly with a mixer, and thereafter a resulting mixture was molded into a composite body having a test piece shape in the size of o 50 x 10 mm under the molding pressure of 2 ton/cm² identical to that of Example 1.

Then, the composite body was burned by increasing the temperature from an ordinary temperature to 1000 °C at the rate of 150 °C/hour, then by maintaining the temperature of 1000 °C for 1 hour, and thereafter by decreasing the temperature fron 1000 °C to an ordinary temperature under an ordinary pressure in a nitrogen gas atmosphere. A first sintered body was thus prepared. After measuring the density of the first sintered body, the first sintered body was further burned by increasing the temperature from an ordinary temperature to 1700 °C at the rate of 500 °C/hour, then by maintaining the temperature of 1700 °C for 20 minutes, and thereafter by decreasing the temperature fron 1700 °C to an ordinary temperature under an ordinary pressure in a nitrogen gas atmosphere. A second sintered body, namely a sliding member of Example 47, was thus prepared.

### (Example 48)

A composite body and a first sintered body of Exanple 48 was prepared by employing the same raw materials and in the same manner as described in Example 47 except that Ni powder having the average particle diameter of 4 µm was employed. After measuring the density of the first sintered body thus prepared, the first sintered body was further burned by increasing the temperature from an ordinary temperature to 1300 °C at the rate of 500 °C/hour, then by maintaining the temperature of 1300 °C for 20 minutes, and thereafter by decreasing the temperature from 1300 °C to an ordinary temperature under an ordinary pressure in a nitrogen gas atmosphere. A second sintered body, namely a sliding member of Example 48, was thus prepared.

### (Evaluation 13)

The densities of the thus prepared sliding members of Examples 47 and 48 were measured first. Then, their bending strength were measured by carrying out a bending strength test identical to the one described in Evaluation 11. The results of the measurement are summarized in Table 4. The results of the measurement on the densities of the first sintered bodies of Examples 47 and 48 are also set forth in Table 4. In addition, the measurements on the abrasion amounts and the loads at seizure of the sliding members of Examples 47 and 48 are set forth in Table 5.

**Table 4**

| | Density (g/cm³), 1st Sintered Body | Density (g/cm³) , 2nd Sintered Body | Bending Strength (kgf/cm²), 2nd Sintered Body |
|---|---|---|---|
| Ex. 47 | 1.67 | 1.79 | 775 |
| Ex. 48 | 1.69 | 1.76 | 810 |

**Table 5**

| | | Par.Dia. ( µm) | Addi. Amount (% by weight) | Density (g/cm³) | Abrasion Amount (µm) | Bending Strength (kgf/cm²) | Load at Seizure (kgf) |
|---|---|---|---|---|---|---|---|
| Ex. 47 | Ti | 8 | 5 | 1.79 | 17 | 775 | 75 |
| Ex. 48 | Ni | 4 | 5 | 1.76 | 14 | 810 | 125 |

It is apparent from Tables 4 and 5 that the bending strength of the sliding member of Example 47 was as high as those of the sliding members of Example 44 in which the inorganic titanium compound was added as the inorganic powder, and that the bending strength of the sliding member of Example 48 exceeded the bending strength exhibited by the sliding member of Example 42 in which nickel boride (NiB) was added as the inorganic powder. Thus, it is expected that the sliding members of Example 47 and 48 can have more favorable properties than those of the conventional sliding member made from the carbon-carbon composite material.

## Claims

1. A dry molding composition for making a sliding member having a predetermined shape and comprising a sintered body, said composition comprising a mixture of:
preliminarily carbonized carbonaceous fibre;
inorganic powder or inorganic fibre; and
self-sintering carbonaceous powder with said preliminarily carbonized carbonaceous fibre and said inorganic powder or said inorganic fibre buried therein.

2. A dry molding composition according to Claim 1, wherein said preliminarily carbonized carbonaceous fibre is at least one selected from the group consisting of polymer fibre and pitch fibre.

3. A dry molding composition according to Claim 2, wherein said polymer fibre is at least one selected from the group consisting of polyacrylonitrile fibre and rayon fibre.

4. A dry molding composition according to Claim 2, wherein said pitch fibre is at least one selected from the group consisting of coal pitch fibre and petroleum pitch fibre.

5. A dry molding composition according to claim 2, wherein said pitch fiber is at least one selected from the group consisting of optically isotropic pitch fiber and optically anisotropic pitch fiber.

6. A dry molding composition according to claim 2, wherein said pitch fiber is infusible pitch fiber.

7. A dry molding composition according to claim 2, wherein said polymer fiber is surface-treated with a viscous material in advance.

8. A dry molding composition according to claim 2, wherein said pitch fiber is surface-treated with a viscous material in advance.

9. A dry molding composition according to claim 1, wherein the length and the diameter of said preliminarily carbonized carbonaceous fiber fall in the ranges of 0.01 to 50 mm and 5 to 25 µm respectively.

10. A dry molding composition according to claim 9, wherein said length of said preliminarily carbonized carbonaceous fiber falls in the range of 0.03 to 10 mm.

11. A dry molding composition according to claim 1, wherein said inorganic powder or inorganic fiber has the melting point of 1000 °C or more and is unreactable with carbon.

12. A dry molding composition according to claim 11, wherein said inorganic powder or inorganic fiber has the Vickers hardness of 1000 Hv or more.

13. A dry molding composition according to claim 1, wherein said inorganic powder is at least one selected from the group consisting of inorganic oxide, inorganic carbide, inorganic nitride, inorganic boride and metal.

14. A dry molding composition according to claim 13, wherein said inorganic oxide is at least one selected from the group consisting of Al₂O₃, TiO₂, ZrO₂ and MgO.

15. A dry molding composition according to claim 13, wherein said inorganic carbide is at least one selected from the group consisting of B₄C, TiC, TaC and ZrC.

16. A dry molding composition according to claim 13, wherein said inorganic nitride is at least one selected from the group consisting of BN, TiN, Cr₂N, TaN, AlN and ZrN.

17. A dry molding composition according to claim 13, wherein said inorganic boride is at least one selected from the group consisting of TiB₂, ZrB₂, B₄C, NiB, CoB, BN and TaB.

18. A dry molding composition according to claim 13, wherein said metal is at least one selected from the group consisting of Fe, Mn, Mo, Ni, Nb, Si, V, Ti and W.

19. A dry molding composition according to claim 1, wherein the average particle diameter of said inorganic powder falls in the range of 0.1 to 5 µm.

20. A dry molding composition according to claim 19, wherein said average particle diameter of said inorganic powder falls in the range of 0.2 to 4 µm.

21. A dry molding composition according to claim 1, wherein said inorganic fiber is at least one selected from the group of Al₂O₃ fiber and ZrO₂ fiber.

22. A dry molding composition according to claim 1, wherein the length and the diameter of said inorganic fiber fall in the ranges of 0.01 to 8 mm and 0.7 to 40 µm respectively.

23. A dry molding composition according to claim 22, wherein said length and said diameter of said inorganic fiber fall in the ranges of 0.05 to 3 mm and 1 to 15 µm respectively.

24. A dry molding composition according to claim 1, wherein 100 parts by weight of said self-sintering carbonaceous powder is mixed with 2 to 70 parts by weight of said preliminarily carbonized carbonaceous fiber.

25. A dry molding composition according to claim 24, wherein 100 parts by weight of said self-sintering carbonaceous powder is mixed with 10 to 50 parts by weight of said preliminarily carbonized carbonaceous fiber.

26. A dry molding composition according to claim 1, wherein said inorganic powder or said inorganic fiber is added by 3 to 30 % by weight with respect to the whole amount of the raw materials taken as 100 %.

27. A dry molding composition according to claim 26, wherein said inorganic powder or said inorganic fiber is added by 5 to 10 % by weight with respect to the whole amount of the raw materials taken as 100 %.

28. A dry molding composition according to claim 1, wherein said self-sintering carbonaceous powder has the average particle diameter of 30 µm or less and the β-resin amount falling in the range of 3 to 50% by weight.

29. A dry molding composition according to Claim 1, wherein said self-sintering carbonaceous powder is coal or petroleum self-sintering carbonaceous powder.

30. A dry molding composition according to Claim 29, wherein said coal or petroleum self-sintering carbonaceous powder is at least one selected from the group consisting of mesocarbon microbeads, pulverized bulkmesophase powder, and pulverized low temperature calcined coke powder.

31. A dry molding composition according to Claim 1 wherein said inorganic powder is boron compound powder.

32. A dry molding composition according to Claim 31, wherein said preliminarily carbonized carbonaceous fibre is at least one selected from the group consisting of polymer fibre and pitch fibre.

33. A dry molding composition according to claim 32, wherein said polymer fiber is at least one selected from the group consisting of polyacrylonitrile fiber and rayon fiber.

34. A dry molding composition according to claim 32, wherein said pitch fiber is at least one selected from the group consisting of coal pitch fiber and petroleum pitch fiber.

35. A dry molding composition according to claim 32, wherein said pitch fiber is at least one selected from the group consisting of optically isotropic pitch fiber and optically anisotropic pitch fiber.

36. A dry molding composition according to claim 32, wherein said pitch fiber is infusible pitch fiber.

37. A dry molding composition according to claim 32, wherein said polymer fiber is surface-treated with a viscous material in advance.

38. A dry molding composition according to claim 32, wherein said pitch fiber is surface-treated with a viscous material in advance.

39. A dry molding composition according to claim 31, wherein the length and the diameter of said preliminarily carbonized carbonaceous fiber fall in the ranges of 0.01 to 50 mm and 5 to 25 µm respectively.

40. A dry molding composition according to claim 39, wherein said length of said preliminarily carbonized carbonaceous fiber falls in the range of 0.03 to 10 mm.

41. A dry molding composition according to claim 31, wherein said boron compound powder is at least one selected from the group consisting of boron carbide, boron nitride, boride of Cr, Ti, Ta, Zr, Al, Ni, Mg, Mn, Fe, V and W.

42. A dry molding composition according to claim 31, wherein the average particle diameter of said boron compound powder falls in the range of 0.1 to 10 µm.

43. A dry molding composition according to claim 42, wherein said average particle diameter of said boron compound powder falls in the range of 0.3 to 5 µm.

44. A dry molding composition according to claim 31, wherein 100 parts by weight of said self-sintering carbonaceous powder is mixed with 2 to 70 parts by weight of said preliminarily carbonized carbonaceous fiber.

45. A dry molding composition according to claim 44, wherein 100 parts by weight of said self-sintering carbonaceous powder is mixed with 10 to 50 parts by weight of said preliminarily carbonized carbonaceous fiber.

46. A dry molding composition according to claim 31, wherein said boron compound powder is added by 1 to 50 % by weight with respect to the whole amount of the raw materials taken as 100 %.

47. A dry molding composition according to claim 46, wherein said boron compound powder is added by 3 to 35 % by weight with respect to the whole amount of the raw materials taken as 100 %.

48. A dry molding composition according to claim 31, wherein said self-sintering carbonaceous powder has the average diameter of 30 µm or less and the β-resin amount falling in the range of 3 to 50 % by weight.

49. A dry molding composition according to claim 31, wherein said self-sintering carbonaceous powder is coal or petroleum self-sintering carbonaceous powder.

50. A dry molding composition according to claim 49, wherein said coal or petroleum self-sintering carbonaceous powder is at least one selected from the group consisting of mesocarbon microbeads, pulverized bulkmesophase powder and pulverized low temperature calcined coke powder.

51. A dry molding composition according claim 31, wherein said sliding member exhibits the load of 9800 kPa (100 kgf/cm²) or more at seizure under no lubrication condition and has the friction coefficient (µ) of 0.15 or less.

## Patentansprüche

1. Trockenpreßmasse zur Herstellung eines Gleitbauteils mit einer vorherbestimmten Form, welches einen gesinterten Körper umfaßt, wobei die Zusammensetzung eine Mischung aus:
einer vorbereitend carbonisierter Kohlefaser;
einem anorganischen Pulver oder einer anorganischen Faser; und
einem selbstsinternden kohlenstoffhaltigen Pulver
umfaßt, wobei die vorbereitend carbonisierte Kohlefaser und das anorganische Pulver oder die anorganische Faser darin eingebettet sind.

2. Trockenpreßmasse gemäß Anspruch 1, wobei die vorbereitend carbonisierte Kohlefaser mindestens eine ist, ausgewählt aus der Gruppe, bestehend aus Polymerfaser und Pechfaser (pitch fibre).

3. Trockenpreßmasse gemäß Anspruch 2, wobei die Polymerfaser mindestens eine ist, ausgewählt aus der Gruppe, bestehend aus Polyacrylnitrilfaser und Rayonfaser.

4. Trockenpreßmasse gemäß Anspruch 2, wobei die Pechfaser mindestens eine ist, ausgewählt aus der Gruppe, bestehend aus Kohlepechfaser und Petrolpechfaser.

5. Trockenpreßmasse gemäß Anspruch 2, wobei die Pechfaser mindestens eine ist, ausgewählt aus der Gruppe, bestehend aus optisch isotroper Pechfaser und optisch anisotroper Pechfaser.

6. Trockenpreßmasse gemäß Anspruch 2, wobei die Pechfaser eine nicht schmelzbare Pechfaser ist.

7. Trockenpreßmasse gemäß Anspruch 2, wobei die Polymerfaser im voraus mit einem viskosen Material oberflächenbehandelt ist.

8. Trockenpreßmasse gemäß Anspruch 2, wobei die Pechfaser im voraus mit einem viskosen Material oberflächenbehandelt ist.

9. Trockenpreßmasse gemäß Anspruch 1, wobei die Länge und der Durchmesser der vorbereitend carbonisierten Kohlefaser in die Bereiche von 0,01 bis 50 mm und entsprechend 5 bis 25 µm fällt.

10. Trockenpreßmasse gemäß Anspruch 9, wobei die Länge der vorbereitend carbonisierten Kohlefaser in den Bereich von 0,03 bis 10 mm fällt.

11. Trockenpreßmasse gemäß Anspruch 1, wobei das anorganische Pulver oder die anorganische Faser den Schmelzpunkt von 1000°C oder mehr besitzt und nicht mit Kohlenstoff umsetzbar ist.

12. Trockenpreßmasse gemäß Anspruch 11, wobei das anorganische Pulver oder die anorganische Faser die Vikkers-Härte von 1000 Hv oder mehr besitzt.

13. Trockenpreßmasse gemäß Anspruch 1, wobei das anorganische Pulver mindestens eines ist, ausgewählt aus der Gruppe, bestehend aus anorganischem Oxid, anorganischem Carbid, anorganischem Nitrid, anorganischem Borid und Metall.

14. Trockenpreßmasse gemäß Anspruch 13, wobei das anorganische Oxid mindestens eines ist, ausgewählt aus der Gruppe, bestehend aus Al₂O₃, TiO₂, ZrO₂ und MgO.

15. Trockenpreßmasse gemäß Anspruch 13, wobei das anorganische Carbid mindestens eines ist, ausgewählt aus der Gruppe, bestehend aus B₄C, TiC, TaC und ZrC.

16. Trockenpreßmasse gemäß Anspruch 13, wobei das anorganische Nitrid mindestens eines ist, ausgewählt aus der Gruppe, bestehend aus BN, TiN, Cr₂N, TaN, AlN und ZrN.

17. Trockenpreßmasse gemäß Anspruch 13, wobei das anorganische Borid mindestens eines ist, ausgewählt aus der Gruppe, bestehend aus TiB₂, ZrB₂, B₄C, NiB, CoB, BN und TaB.

18. Trockenpreßmasse gemäß Anspruch 13, wobei das Metall mindestens eines ist, ausgewählt aus der Gruppe, bestehend aus Fe, Mn, Mo, Ni, Nb, Si, V, Ti und W.

19. Trockenpreßmasse gemäß Anspruch 1, wobei der mittlere Teilchendurchmesser des anorganischen Pulvers in den Bereich von 0,1 bis 5 µm fällt.

20. Trockenpreßmasse gemäß Anspruch 19, wobei der mittlere Teilchendurchmesser des anorganischen Pulvers in den Bereich von 0,2 bis 4 µm fällt.

21. Trockenpreßmasse gemäß Anspruch 1, wobei die anorganische Faser mindestens eine ist, ausgewählt aus der Gruppe, bestehend aus Al₂O₃-Faser und ZrO₂-Faser.

22. Trockenpreßmasse gemäß Anspruch 1, wobei die Länge und der Durchmesser der anorganischen Faser in die Bereiche von 0,01 bis 8 mm und entsprechend 0,7 bis 40 µm fällt.

23. Trockenpreßmasse gemäß Anspruch 22, wobei die Länge und der Durchmesser der anorganischen Faser in die Bereiche von 0,05 bis 3 mm und entsprechend 1 bis 15 µm fällt.

24. Trockenpreßmasse gemäß Anspruch 1, wobei 100 Gewichtsteile des selbstsinternden kohlenstoffhaltigen Pulvers mit 2 bis 70 Gewichtsteilen der vorbereitend carbonisierten Kohlefaser vermischt sind.

25. Trockenpreßmasse gemäß Anspruch 24, wobei 100 Gewichtsteile des selbstsinternden kohlenstoffhaltigen Pulvers mit 10 bis 50 Gewichtsteilen der vorbereitend carbonisierten Kohlefaser vermischt sind.

26. Trockenpreßmasse gemäß Anspruch 1, wobei das anorganische Pulver oder die anorganische Faser mit 3 bis 30 Gew.-% zugegeben werden, unter Berücksichtigung, daß die Gesamtmenge der Rohmaterialien als 100% genommen wird.

27. Trockenpreßmasse gemäß Anspruch 26, wobei das anorganische Pulver oder die anorganische Faser mit 5 bis 10 Gew.-% zugegeben werden, unter Berücksichtigung, daß die Gesamtmenge der Rohmaterialien als 100% genommen wird.

28. Trockenpreßmasse gemäß Anspruch 1, wobei das selbstsinternde kohlenstoffhaltige Pulver den mittleren Teilchendurchmesser von 30 µm oder weniger besitzt, und Menge an β-Harzmenge in den Bereich von 3 bis 50 Gew.-% fällt.

29. Trockenpreßmasse gemäß Anspruch 1, wobei das selbstsinternde kohlenstoffhaltige Pulver selbstsinterndes kohlenstoffhaltiges Kohle- oder Petroleumpulver ist.

30. Trockenpreßmasse gemäß Anspruch 29, wobei das selbstsinternde kohlenstoffhaltige Kohle- oder Petroleumpulver mindestens eines ist, ausgewählt aus der Gruppe, bestehend aus Mesocarbon-Mikroperlen, pulverisiertem Mesophasen-Rohpulver und pulverisiertem Niedertemperatur-calciniertem Kokspulver.

31. Trockenpreßmasse gemäß Anspruch 1, wobei das anorganische Pulver ein Pulver einer Borverbindung ist.

32. Trockenpreßmasse gemäß Anspruch 31, wobei die vorbereitend carbonisierte Kohlefaser mindestens eine ist, ausgewählt aus der Gruppe, bestehend aus Polymerfaser und Pechfaser.

33. Trockenpreßmasse gemäß Anspruch 32, wobei die Polymerfaser mindestens eine ist, ausgewählt aus der Gruppe, bestehend aus Polyacrylnitrilfaser und Rayonfaser.

34. Trockenpreßmasse gemäß Anspruch 32, wobei die Pechfaser mindestens eine ist, ausgewählt aus der Gruppe, bestehend aus Kohlepechfaser und Petrolpechfaser.

35. Trockenpreßmasse gemäß Anspruch 32, wobei die Pechfaser mindestens eine ist, ausgewählt aus der Gruppe, bestehend aus optisch isotroper Pechfaser und optisch anisotroper Pechfaser.

36. Trockenpreßmasse gemäß Anspruch 32, wobei die Pechfaser eine nicht schmelzbare Pechfaser ist.

37. Trockenpreßmasse gemäß Anspruch 32, wobei die Polymerfaser im voraus mit einem viskosen Material oberflächenbehandelt ist.

38. Trockenpreßmasse gemäß Anspruch 32, wobei die Pechfaser im voraus mit einem viskosen Material oberflächenbehandelt ist.

39. Trockenpreßmasse gemäß Anspruch 31, wobei die Länge und der Durchmesser der vorbereitend carbonisierten Kohlefaser in die Bereiche von 0,01 bis 50 mm und entsprechend 5 bis 25 µm fällt.

40. Trockenpreßmasse gemäß Anspruch 39, wobei die Länge der vorbereitend carbonisierten Kohlefaser in den Bereich von 0,03 bis 10 mm fällt.

41. Trockenpreßmasse gemäß Anspruch 31, wobei das Pulver der Borverbindung mindestens eines ist, ausgewählt aus der Gruppe, bestehend aus Borcarbid, Bornitrid, einem Borid von Cr, Ti, Ta, Zr, Al, Ni, Mg, Mn, Fe, V und W.

42. Trockenpreßmasse gemäß Anspruch 31, wobei der mittlere Teilchendurchmesser des Pulvers der Borverbindung in den Bereich von 0,1 bis 10 µm fällt.

43. Trockenpreßmasse gemäß Anspruch 42, wobei der mittlere Teilchendurchmesser des Pulvers der Borverbindung in den Bereich von 0,3 bis 5 µm fällt.

44. Trockenpreßmasse gemäß Anspruch 31, wobei 100 Gewichtsteile des selbstsinternden kohlenstoffhaltigen Pulvers mit 2 bis 70 Gewichtsteilen der vorbereitend carbonisierten Kohlefaser vermischt sind.

45. Trockenpreßmasse gemäß Anspruch 44, wobei 100 Gewichtsteile des selbstsinternden kohlenstoffhaltigen Pulvers mit 10 bis 50 Gewichtsteilen der vorbereitend carbonisierten Kohlefaser vermischt sind.

46. Trockenpreßmasse gemäß Anspruch 31, wobei das Pulver der Borverbindung mit 1 bis 50 Gew.-% zugegeben wird, unter Berücksichtigung, daß die Gesamtmenge der Rohmaterialien als 100% genommen wird.

47. Trockenpreßmasse gemäß Anspruch 46, wobei das Pulver der Borverbindung mit 3 bis 35 Gew.-% zugegeben wird, unter Berücksichtigung, daß die Gesamtmenge der Rohmaterialien als 100% genommen wird.

48. Trockenpreßmasse gemäß Anspruch 31, wobei das selbstsinternde kohlenstoffhaltige Pulver den mittleren Durchmesser von 30 µm oder weniger besitzt, und die Menge an β-Harz in den Bereich von 3 bis 50 Gew.-% fällt.

49. Trockenpreßmasse gemäß Anspruch 31, wobei das selbstsinternde kohlenstoffhaltige Pulver selbstsinterndes kohlenstoffhaltiges Kohle- oder Petroleumpulver ist.

50. Trockenpreßmasse gemäß Anspruch 49, wobei das selbstsinternde kohlenstoffhaltige Kohle- oder Petroleumpulver mindestens eines ist, ausgewählt aus der Gruppe, bestehend aus Mesocarbon-Mikroperlen, pulverisiertem Mesophasen-Rohpulver und pulverisiertem Niedertemperatur-calciniertem Kokspulver.

51. Trockenpreßmasse gemäß Anspruch 31, wobei das Gleitbauteil beim Aneinanderreiben (seizure) unter keiner Gleitbedingung die Last von 9800 kPa (100 kgf/cm²) oder mehr aufweist und den Reibungskoeffizienten (µ) von 0,15 oder weniger besitzt.

## Revendications

1. Une composition de moulage à sec pour fabriquer un organe coulissant ayant une forme prédéterminée et comprenant un corps fritté, ladite composition comprenant un mélange de:
- fibre carbonacée carbonisée au préalable;
- poudre inorganique ou fibre inorganique; et
- poudre carbonacée auto-frittable avec ladite fibre carbonacée carbonisée au préalable et ladite poudre inorganique ou lesdites fibres inorganiques y étant noyées.

2. Une composition de moulage à sec selon la revendication 1, dans laquelle ladite fibre carbonacée carbonisée au préalable est au moins une fibre sélectionnée dans le groupe consistant en une fibre polymère et une fibre de poix.

3. Une composition de moulage à sec selon la revendication 2, dans laquelle ladite fibre polymère est au moins une fibre sélectionnée dans le groupe consistant en une fibre de polyacrylonitrile et une fibre de rayonne.

4. Une composition de moulage à sec selon la revendication 2, dans laquelle ladite fibre de poix est au moins une fibre sélectionnée dans le groupe consistant en une fibre de brai de houille et une fibre de poix de pétrole.

5. Un composition de moulage à sec selon la revendication 2, dans laquelle ladite fibre de poix est au moins une fibre sélectionnée dans le groupe consistant en fibre de poix optiquement isotrope et de fibre de poix optiquement anisotrope.

6. Une composition de moulage à sec selon la revendication 2, dans laquelle ladite fibre de poix est une fibre de poix non fusible.

7. Une composition de moulage à sec selon la revendication 2, dans laquelle ladite fibre polymère est traitée en surface au préalable par un produit visqueux.

8. Une composition de moulage à sec selon la revendication 2, dans laquelle ladite fibre de poix est traitée en surface au préalable par un produit visqueux.

9. Une composition de moulage à sec selon la revendication 1, dans laquelle la longueur et le diamètre de ladite fibre carbonacée carbonisée au préalable sont compris respectivement dans les plages allant de 0,01 à 50 mm et de 50 à 25 µm.

10. Une composition de moulage à sec selon la revendication 9, dans laquelle ladite longueur de ladite fibre carbonacée carbonisée au préalable est comprise dans la plage allant de 0,03 à 10 mm.

11. Une composition de moulage à sec selon la revendication 1, dans laquelle ladite poudre inorganique ou la fibre inorganique présente un point de fusion de 1000°C ou plus et ne peut pas réagir avec ce carbone.

12. Une composition de moulage à sec selon la revendication 2, dans laquelle poudre inorganique ou la fibre inorganique présente une dureté Vickers de 1000 Hv ou plus.

13. Une composition de moulage à sec selon la revendication 1, dans laquelle ladite poudre inorganique est au moins une poudre sélectionnée dans le groupe consistant en oxyde inorganique, carbure inorganique, nitrure inorganique, borure inorganique et métal.

14. Une composition de moulage à sec selon la revendication 13, dans laquelle ledit oxyde inorganique est au moins un oxyde sélectionné dans le groupe consistant en Al₂O₃, TiO₂, ZrO₂ et MgO.

15. Une composition de moulage à sec selon la revendication 13, dans laquelle ledit carbure inorganique est au moins un carbure sélectionné dans le groupe consistant en B₄C, TiC, TaC et ZrC.

16. Une composition de moulage à sec selon la revendication 13, dans laquelle ledit nitrure inorganique est au moins un nitrure sélectionné dans le groupe consistant en BN, TiN, Cr₂, TaN, AlN et ZrN.

17. Une composition de moulage à sec selon la revendication 13, dans laquelle ledit borure inorganique est au moins un borure sélectionné dans le groupe consistant en TiB₂, ZrB₂, B₄C, NiB, CoB, BN et TaB.

18. Une composition de moulage à sec selon la revendication 13, dans laquelle ledit métal est au moins un métal sélectionné dans le groupe consistant en Fe, Mn, Mo, Ni, Nb, Si, V, Ti et W.

19. Une composition de moulage à sec selon la revendication 1, dans laquelle le diamètre particulaire moyen de ladite poudre inorganique est compris dans la plage allant de 0,1 à 5 µm.

20. Une composition de moulage à sec selon la revendication 19, dans laquelle ledit diamètre particulaire moyen de ladite poudre inorganique est compris dans la plage allant de 0,2 à 4 µm.

21. Une composition de moulage à sec selon la revendication 1, dans laquelle ladite fibre inorganique est au moins une fibre sélectionnée dans le groupe consistant en une fibre de Al₂O₃ et une fibre de ZrO₂.

22. Une composition de moulage à sec selon la revendication 1, dans laquelle la longueur et le diamètre de ladite fibre inorganique sont respectivement compris dans les plages allant de 0,01 à 8 mm et de 0,7 à 40 µm.

23. Une composition de moulage à sec selon la revendication 22, dans laquelle ladite longueur et ledit diamètre de ladite fibre inorganique sont respectivement compris dans les plages allant de 0,05 à 3 mm et de 1 à 15 µm.

24. Une composition de moulage à sec selon la revendication 1, dans laquelle 100 parties en poids de ladite poudre carbonacée auto-frittable sont mélangées avec 2 à 70 parties en poids de ladite fibre carbonacée carbonisée au préalable.

25. Une composition de moulage à sec selon la revendication 24, dans laquelle 100 parties de ladite poudre carbonacée auto-frittable sont mélangées avec 10 à 50 parties en poids de ladite fibre carbonacée carbonisée au préalable.

26. Une composition de moulage à sec selon la revendication 1, dans laquelle ladite poudre inorganique ou ladite fibre inorganique sont ajoutées en une quantité allant de 3 à 30% en poids par rapport à la quantité totale des matériaux bruts constituant 100%.

27. Une composition de moulage à sec selon la revendication 26, dans laquelle ladite poudre inorganique ou ladite fibre inorganique sont ajoutées en une quantité allant de 5 à 10% en poids par rapport à la quantité totale de 100% des matériaux bruts.

28. Une composition de moulage à sec selon la revendication 1, dans laquelle ladite poudre carbonacée auto-frittable présente un diamètre particulaire moyen de 30 µm ou moins et la quantité de résine β est comprise dans la plage allant de 3 à 50% en poids.

29. Une composition de moulage à sec selon la revendication 1, dans laquelle ladite poudre carbonacée auto-frittable est une poudre carbonacée auto-frittable à base de houille ou de pétrole.

30. Une composition de moulage à sec selon la revendication 29, dans laquelle ladite poudre carbonacée auto-frittable à base de houille ou de pétrole est au moins une poudre sélectionnée dans le groupe composé de microperles de carbone mésomorphe, d'une poudre pulvérisée en phase mésomorphe dans la masse, et d'une poudre pulvérisée de coke calcinée à faible température.

31. Une composition de moulage à sec selon la revendication 1, dans laquelle ladite poudre inorganique est une poudre de composé de bore.

32. Une composition de moulage à sec selon la revendication 31, dans laquelle ladite fibre carbonacée carbonisée au préalable est au moins une fibre sélectionnée dans le groupe consistant en une fibre polymère et une fibre de poix.

33. Une composition de moulage à sec selon la revendication 32, dans laquelle ladite fibre polymère est au moins une fibre sélectionnée dans le groupe consistant en une fibre de polyacrylonitrile et une fibre de rayonne.

34. Une composition de moulage à sec selon la revendication 32, dans laquelle ladite fibre de poix est au moins une fibre sélectionnée dans le groupe consistant en une fibre de poix de houille et une fibre de poix de pétrole.

35. Une composition de moulage à sec selon la revendication 32, dans laquelle ladite fibre de poix est au moins une fibre sélectionnée dans le groupe consistant en une fibre de poix optiquement isotrope et une fibre de poix optiquement anisotrope.

36. Une composition de moulage à sec selon la revendication 32, dans laquelle ladite fibre de poix est une fibre de poix non fusible.

37. Une composition de moulage à sec selon la revendication 32, dans laquelle ladite fibre polymère est traitée en surface au préalable par un produit visqueux.

38. Une composition de moulage à sec selon la revendication 32, dans laquelle ladite fibre de poix est traitée en surface au préalable par un produit visqueux.

39. Une composition de moulage à sec selon la revendication 31, dans laquelle la longueur et le diamètre de ladite fibre carbonacée carbonisée au préalable sont respectivement compris dans les plages allant de 0,01 à 50 mm et de 5 à 25 µm.

40. Une composition de moulage à sec selon la revendication 39, dans laquelle ladite longueur de ladite fibre carbonacée carbonisée au préalable est comprise dans la plage allant de 0,03 à 10 mm.

41. Une composition de moulage à sec selon la revendication 31, dans laquelle ladite poudre de composé de bore est au moins une poudre sélectionnée dans le groupe consistant en le carbure de bore, le nitrure de bore, le borure de Cr, Ti, Ta, Zr, Al, Ni, Mg, Mn, Fe, V et W.

42. Une composition de moulage à sec selon la revendication 31, dans laquelle le diamètre particulaire de ladite poudre de composé de bore est comprise dans la plage allant de 0,1 à 10 µm.

43. Une composition de moulage à sec selon la revendication 42, dans laquelle ledit diamètre particulaire moyen de ladite poudre de composé de bore est compris dans la plage allant de 0,3 à 5 µm.

44. Une composition de moulage à sec selon la revendication 31, dans laquelle 100 parties en poids de ladite poudre carbonacée auto-frittable sont mélangées à 2 à 70 parties en poids de ladite fibre carbonacée carbonisée au préalable.

45. Une composition de moulage à sec selon la revendication 44, dans laquelle 100 parties de ladite poudre carbonacée auto-frittable sont mélangées à 10 à 50 parties en poids de ladite fibre carbonacée carbonisée au préalable.

46. Une composition de moulage à sec selon la revendication 31, dans laquelle ladite poudre de composé de bore est ajoutée en une quantité allant de 1 à 50% en poids par rapport à la quantité totale, prise à 100%, des matériaux bruts.

47. Une composition de moulage à sec selon la revendication 46, dans laquelle ladite poudre de composé de bore est ajoutée en une quantité allant de 3 à 35% en poids par rapport à la quantité totale, prise à 100%, des matériaux bruts.

48. Une composition de moulage à sec selon la revendication 31, dans laquelle ladite poudre carbonacée auto-frittable présente un diamètre moyen de 30 µm ou moins et la quantité de résine β est comprise dans la plage allant de 3 à 50% en poids.

49. Une composition de moulage à sec selon la revendication 31, dans laquelle ladite poudre carbonacée auto-frittable est une poudre carbonacée auto-frittable de houille ou de pétrole.

50. Une composition de moulage à sec selon la revendication 49, dans laquelle ladite poudre carbonacée auto-frittable à base de houille ou de pétrole est au moins une poudre sélectionnée dans le groupe consistant en microperles de carbone mésomorphe, de poudre en phase mésomorphe dans la masse pulvérisée, et d'une poudre de coke, calcinée à faible température pulvérisée.

51. Une composition de moulage à sec selon la revendication 31, dans laquelle ledit organe coulissant présente une charge au grippage de 9800 kPa (100 kgf/cm²) ou plus, sans lubrification, et a un coefficient de friction (µ) de 0,15 ou moins.
